# EUROPÄISCHE PATENTSCHRIFT

(11) **EP 3 382 353 B1**
(45) Veröffentlichungstag und Bekanntmachung des Hinweises auf die Patenterteilung: **12.02.2020**
(21) Anmeldenummer: 18160257.4
(22) Anmeldetag: 06.03.2018
(51) Int. Cl.: G01F 23/02

(54) **ANZEIGEEINRICHTUNG FÜR DIE VISUELLE KONTROLLE EINES FLÜSSIGKEITSFÜLLSTANDS INSBESONDERE IN EINEM GETRIEBE**
DISPLAY DEVICE FOR THE VISUAL MONITORING OF A FLUID LEVEL, IN PARTICULAR IN A TRANSMISSION
DISPOSITIF D'AFFICHAGE POUR LA COMMANDE VISUELLE D'UN NIVEAU DE REMPLISSAGE DE FLUIDE, EN PARTICULIER DANS UNE BOÎTE DE VITESSES

(30) Priorität: 30.03.2017 DE 102017106926
(43) Veröffentlichungstag der Anmeldung: 03.10.2018
(73) Patentinhaber: Zollern GmbH & Co. KG, 72517 Sigmaringen-Laucherthal (DE)
(72) Erfinder: Hartmann, Roland, 72511 Bingen (DE); Häußler, Pierre, 72458 Albstadt (DE); Nazifi, Khashayar, 58300 Wetter (DE)
(74) Vertreter: SSM Sandmair

(56) Entgegenhaltungen:
- EP-A1- 0 625 695
- DE-B- 1 071 363
- DE-U1- 8 535 596
- US-A- 1 068 626
- US-A- 3 968 688
- US-A- 4 557 216
- US-A- 5 579 803

## Beschreibung

Die Erfindung betrifft eine Anzeigeeinrichtung, an der ein Flüssigkeitsfüllstand (Flüssigkeitsstand), insbesondere ein Öl- oder Schmierölfüllstand, visuell ablesbar ist. Die Anzeigeeinrichtung kann bevorzugt an einem Getriebe vorgesehen sein, um damit den Ölfüllstand in dem Getriebe visuell ablesen zu können. Allerdings kann die Anzeigeeinrichtung allgemein für die Kontrolle eines Flüssigkeitsfüllstands an einem Flüssigkeitsbehälter vorgesehen sein.

Aus dem Stand der Technik sind sogenannte Schaugläser bekannt, die mit einem Hauptbehälter flüssigkeitskommunizierend verbunden sind, so dass sich der Flüssigkeitsstand in dem Hauptbehälter und der Flüssigkeitsstand in dem Schauglas aufgrund des hydrostatischen Paradoxon aneinander angleichen. Durch Ablesen des Flüssigkeitsstands im Schauglas, d. h. durch die visuelle Ermittlung der Position des Flüssigkeitsspiegels, kann auf den Flüssigkeitsstand im Hauptbehälter geschlossen werden. Die US 3,968,688 A, die EP 0 625 695 A1 und die DE 10 71 363 B beschreiben mögliche Konstruktionen solcher Schaugläser.

Die US 5,579,803 A offenbart ein Kugelabsperrventil für Gaschromatographen, welches ein Eindringen von Flüssigkeit in den Gaschromatographen verhindern und gleichzeitig dem Bediener Aufschluss über den Flüssigkeitsstand geben soll.

Ein Beispiel für eine Anzeigeeinrichtung, an welchem der Ölfüllstand einer Freilaufkupplung angezeigt wird, ist in der DE 85 35 596 U1 offenbart.

Ferner sind tauchgeschmierte Getriebe bekannt, d. h. dass in einem Getriebe Öl bis zu einem bestimmen Flüssigkeitsstand eingefüllt wird, wobei der Flüssigkeitsstand so ausgelegt ist, dass sich drehende Getriebekomponenten, wie z. B. Zahnräder, teilweise in das Öl eingetaucht sind. Die sich drehenden Getriebekomponenten nehmen das Öl mit. Durch günstige Bauteil- und Gehäusegestaltung kann das mitgenommene und wieder abtropfende Öl auch an höher liegende, nicht eintauchende Schmierstellen, wie z. B. Wälzlager, transportiert werden. Für eine ordnungsgemäße Tauchschmierung ist es erforderlich, dass sich der Flüssigkeitsstand, d. h. die Position des Flüssigkeitsspiegels, zwischen einem maximalen Flüssigkeitsstand und einem minimalen Flüssigkeitsstand befindet. Der maximale und minimale Flüssigkeitsstand werden in der Regel vom Hersteller festgelegt und können z. B. durch Markierungen an entsprechender Stelle des Getriebes oder an dem Schauglas gekennzeichnet werden. Ist der Ölstand zu niedrig oder unterhalb des minimalen Flüssigkeitsstands, besteht die Gefahr, dass das Getriebe nicht mehr ordnungsgemäß geschmiert wird. Ist zu viel Öl im Getriebe, d. h. ist der Ölstand oberhalb des maximalen Flüssigkeitsstands, besteht die Gefahr von erhöhten Planschverlusten im Getriebe, wodurch der Wirkungsgrad gesenkt wird.

Der vorliegenden Erfindung liegt die Aufgabe zugrunde, eine Anzeigeeinrichtung (Anzeigevorrichtung), an der ein Flüssigkeitsstand oder die Position des Flüssigkeitsspiegels visuell ablesbar ist, bereitzustellen, die einfach und wenig umständlich ablesbar und kostengünstig herstellbar ist.

Die Aufgabe wird mit der Anzeigeeinrichtung mit den Merkmalen nach Anspruch 1 gelöst. Vorteilhafte Weiterentwicklungen ergeben sich aus den abhängigen Ansprüchen, der Beschreibung und den Figuren.

Die Anzeigeeinrichtung kann in bevorzugten Anwendungen an einem Flüssigkeitsbehälter allgemein oder an einem Getriebe vorgesehen sein. Das Getriebe kann z. B. Teil einer Winde, insbesondere Zugmittelwinde oder Seilwinde sein.

Die Anzeigeeinrichtung umfasst einen Grundkörper, der mindestens eine erste Sitzfläche und optional eine zweite Sitzfläche bildet, die sich zumindest teilweise, insbesondere teilweise oder vollständig, über den Umfang des Grundkörpers insbesondere kreisförmig und/oder konzentrisch zu einer Drehachse, erstrecken. Die erste Sitzfläche und/oder die zweite Sitzfläche können beispielsweise zylindrisch, insbesondere kreiszylindrisch, d. h. ein Kreiszylinder oder ein Segment davon sein.

Die Anzeigeeinrichtung weist eine sich zumindest teilweise über den Umfang des Grundkörpers, insbesondere teilweise oder vollständig, erstreckende Vertiefung auf. Optional kann Vertiefung zwischen der ersten Sitzfläche und der zweiten Sitzfläche angeordnet sein, d. h., die Vertiefung kann die erste Sitzfläche von der zweiten Sitzfläche trennen.

Die Anzeigeeinrichtung umfasst einen Abdeckring oder ein Abdeckringsegment, der oder das zumindest abschnittsweise, d. h. abschnittsweise oder vollständig, transparent ausgebildet sein kann. Der Abdeckring oder das Abdeckringsegment kann z. B. aus einem transparenten Material, wie z. B. Glas oder Acrylglas (Polymethylmethacrylat, PMMA) gebildet sein. Der Abdeckring oder das Abdeckringsegment kann klartransparent oder farbigtransparent sein. In Ausführungen, in denen der Abdeckring oder das Abdeckringsegment nur abschnittsweise transparent ist, kann der Abdeckring oder das Abdeckringsegment opake Abschnitte aufweisen, wie z. B. durch eine Beschichtung der äußeren oder inneren Oberfläche des Abdeckrings oder das Abdeckringsegment oder durch Satinieren, d. h. Aufrauen der Oberfläche, erreicht werden kann. Der Abdeckring oder das Abdeckringsegment kann z. B. zylindrisch, insbesondere kreiszylindrisch, sein. Der Abdeckring oder das Abdeckringsegment kann die erste Sitzfläche und die optionale zweite Sitzfläche abdecken und die Vertiefung abdecken oder begrenzen. Beispielsweise kann der Abdeckring oder das Abdeckringsegment die erste Sitzfläche, die optionale zweite Sitzfläche und die Vertiefung umfangsseitig umgeben und/oder kann beispielsweise konzentrisch zu einer Drehachse angeordnet sein. Die sich in Richtung der Achse oder Drehachse, um die sich die erste Sitzfläche, die optionale zweite Sitzfläche und der Abdeckring oder das Abdeckringsegment zumindest teilweise erstrecken, erstreckende Breite des Abdeckrings oder des Abdeckringsegments ist größer als die Breite der Vertiefung, so dass der Abdeckring oder das Abdeckringsegment die erste Sitzfläche, die Vertiefung und die optionale zweite Sitzfläche überspannt. Der Abdeckring oder das Abdeckringsegment begrenzt mit seiner Innenumfangsfläche die Vertiefung, die insbesondere zum Abdeckring oder Abdeckringsegment hin offen ist.

Der von der Vertiefung und dem Abdeckring oder Abdeckringsegment eingefasste Raum dient zur Aufnahme der Flüssigkeit, deren Flüssigkeitsstand, d. h. die Position des Flüssigkeitsspiegels, mit dem Auge oder visuell durch den transparenten Abdeckring oder das Abdeckringsegment oder zumindest durch einen transparenten Abschnitt davon ablesbar ist. Mit anderen Worten weist die Anzeigeeinrichtung einen Raum auf, der von der Vertiefung und dem Abdeckring oder dem Abdeckringsegment eingefasst oder begrenzt wird oder ist, wobei der (sich in dem Raum ausbildende) Flüssigkeitsstand der in dem Raum aufnehmbaren Flüssigkeit durch den zumindest abschnittsweise transparenten Abdeckring oder das zumindest abschnittsweise transparente Abdeckringsegment visuell ablesbar ist. Der Vorteil gegenüber einem herkömmlichen Schauglas ist, dass der Abdeckring oder das Abdeckringsegment ein Ablesen des Flüssigkeitsstands von gegenüberliegenden Seiten des Abdeckrings oder Abdeckringsegments ermöglicht, während ein Schauglas nur von einer Seite abgelesen werden kann. Das beidseitige Ablesen ist im Besonderen dann von Vorteil, wenn es für die Person, die den Flüssigkeitsstand ablesen möchte aufwändig ist, von einer Seite auf die andere Seite der Anzeigeeinrichtung zu gelangen, beispielsweise dann, wenn die Anzeigeeinrichtung Teil eines komplexeren Bauteils, wie z. B. eines Getriebes, ist.

Die Vertiefung kann eine sich zumindest teilweise über den Umfang, insbesondere teilweise oder vollständig, erstreckende, zum Abdeckring oder Abdeckringsegment offene Nut oder Ringnut sein, die mittels des Abdeckrings oder Abdeckringsegments verschlossen ist. Die vollständig über den Umfang sich erstreckende Vertiefung kann einen Ringraum bilden, der zur Aufnahme der Flüssigkeit, deren Stand abgelesen werden soll, dient, wie bereits erwähnt wurde. Der Abdeckring oder das Abdeckringsegment und die Nut oder Ringnut mit ihren seitlichen Nutflanken und ihrem Nutgrund können den Raum oder Ringraum zur Aufnahme der Flüssigkeit, deren Stand abgelesen werden soll, begrenzen oder einfassen. Beispielsweise begrenzt eine erste Nutflanke die Breite der Nut zur ersten Sitzfläche hin und eine zweite Nutflanke die Breite der Nut zu der zweiten Sitzfläche oder einer Stirnwand hin. Der Nutgrund verbindet die beiden Nutflanken und/oder ist von der Innenumfangsfläche des Abdeckrings oder einer Innenfläche des Abdeckringsegments beabstandet. Der Raum zur Aufnahme der Flüssigkeit wird somit radial zwischen dem Nutgrund und der Innen(umfangs)fläche des Abdeckrings oder Abdeckringsegments und axial zwischen den beiden Nutflanken eingefasst.

In die Vertiefung oder die Nut, insbesondere durch den Nutgrund der Nut hindurch, kann ein Fluidkanal münden, der beispielsweise mit einem Flüssigkeitsbehälter oder einem Aufnahmeraum für Flüssigkeit, deren Flüssigkeitsstand ermittelt werden soll, verbindbar oder verbunden ist. Der Grundkörper kann den Fluidkanal aufweisen oder zumindest teilweise aufweisen. Beispielsweise kann der Fluidkanal eine radiale Bohrung und eine axiale Bohrung aufweisen. Die radiale Bohrung kann z. B. in die Vertiefung oder den Nutgrund münden, wobei die axiale Bohrung an eine Stirnseite des Grundkörpers münden kann. Beispielsweise kann der Fluidkanal an der tiefsten Stelle oder dem tiefsten Punkt der Vertiefung in diese münden.

Die hierin verwendeten relativen Angaben beziehen sich - sofern nichts anderes angegeben ist - auf die Schwerkraftrichtung. Unter einem tiefsten Punkt oder einer tiefsten Stelle wird der nächst zum Erdboden hin liegende Punkt oder Stelle verstanden. Unter einem höchsten Punkt wird der am weitesten von dem Erdmittelpunkt entfernte Punkt oder Stelle verstanden. Oberhalb bedeutet weiter vom Erdmittelpunkt weg und unterhalb näher zum Erdmittelpunkt hin.

Optional kann die Anzeigeeinrichtung eine Entlüftungseinrichtung aufweisen, die beispielsweise am obersten Punkt oder der obersten Stelle der Vertiefung oder des Anzeigerings oder des Anzeigeringsegments angeordnet sein kann.

Beispielsweise kann die Anzeigeeinrichtung eine Markierung für einen minimalen Flüssigkeitsstand und/oder eine Markierung für einen maximalen Flüssigkeitsstand aufweisen. Der Flüssigkeitsstand befindet sich im Soll, wenn der Flüssigkeitsspiegel zwischen den Markierungen für den minimalen Flüssigkeitsstand und dem maximalen Flüssigkeitsstand sich befindet. Befindet sich der Flüssigkeitsspiegel unterhalb des minimalen Flüssigkeitsstands ist zu wenig Flüssigkeit enthalten, so dass es empfehlenswert ist, Flüssigkeit nachzufüllen. Befindet sich der Flüssigkeitsspiegel oberhalb der Markierung für den maximalen Füllstand, ist zu viel Flüssigkeit enthalten und ist es empfehlenswert, Flüssigkeit zu entnehmen.

Der Fluidkanal kann vorzugsweise an einer Stelle in die Vertiefung münden, die unterhalb des minimalen Flüssigkeitsstands oder der Markierung für den minimalen Flüssigkeitsstand angeordnet ist. Dadurch wird sichergestellt, dass die Anzeige des Flüssigkeitsstands bis zum minimalen Flüssigkeitsstand oder darüber korrekt angibt.

Ein zusätzlicher Fluidkanal kann an einer Stelle in die Vertiefung oder die Nut oder Ringnut münden, die oberhalb des maximalen Flüssigkeitsstands oder der Markierung für den maximalen Flüssigkeitsstand angeordnet ist. Beispielsweise kann dieser Fluidkanal als Entlüftung und/oder als Zufluss für Flüssigkeit dienen, wobei in letzterem Fall bevorzugt ist, dass der andere Fluidkanal als Flüssigkeitsabfluss oder Fluidabführkanal dient.

Beispielsweise kann zwischen der ersten Sitzfläche und dem Abdeckring oder dem Abdeckringsegment eine sich zumindest teilweise über den Umfang erstreckende Dichtung, insbesondere ein Dichtring, und/oder zwischen der zweiten Sitzfläche und dem Abdeckring oder dem Abdeckringsegment eine sich zumindest teilweise über den Umfang erstreckende Dichtung, insbesondere ein Dichtring, angeordnet sein. Zwischen den Dichtungen der ersten und zweiten Sitzfläche ist die Vertiefung angeordnet. Die Dichtungen dienen dazu, den durch die Vertiefung gebildeten Raum gegenüber der Umgebung abzudichten. Die Dichtungen können an dem Abdeckring oder Abdeckringsegment, insbesondere an deren Innen(umfangs)fläche und an der entsprechenden Sitzfläche dichtend anliegen.

Beispielsweise kann zwischen der Sitzfläche und dem Abdeckring oder Abdeckringsegment eine sich zumindest teilweise über den Umfang erstreckende Dichtung, insbesondere Dichtring, und/oder zwischen einer ersten oder zweiten Stirnwand des Grundkörpers oder eines vom Grundkörper separaten Teils und einer Stirnfläche des Abdeckrings oder Abdeckringsegments eine sich zumindest teilweise über den Umfang erstreckende Dichtung, insbesondere Dichtring, angeordnet sein. Die Dichtungen können an dem Abdeckring oder Abdeckringsegment, insbesondere an deren Innen(umfangs)fläche und an der entsprechenden Stirnfläche dichtend anliegen. In diesem Beispiel wird die zusätzliche Sitzfläche nicht benötigt, wenngleich sie auch vorhanden sein kann. Die Vertiefung kann nutförmig sein, wobei eine aus einer ersten und zweiten Stirnwand die eine Nutflanke und der Abschnitt, der die erste Sitzfläche bildet, die andere Nutflanke der nutförmigen Vertiefung bilden kann.

Für die Montage kann der Abdeckring oder das Abdeckringsegment axial über die erste Sitzfläche, die Vertiefung und die optionale zweite Sitzfläche geschoben werden, bis er oder es an der Stirnfläche oder gegebenenfalls an der an der Stirnfläche anliegenden Dichtung anstößt. Hierdurch wird eine einfache und kostengünstige sowie einfach zu montierende Lösung erreicht.

Alternativ oder zusätzlich zu den Dichtungen können zumindest eine oder beide Sitzflächen als Dichtflächen ausgestaltet sein. Alternativ oder zusätzlich kann der Abdeckring oder das Abdeckringsegment mit der ersten und/oder zweiten Sitzfläche verklebt sein, insbesondere dort, wo die Dichtung sein sollte.

Beispielsweise kann der Abdeckring oder das Abdeckringsegment stirnseitig zwischen einer ersten und zweiten Stirnwand eingefasst, insbesondere eingeklemmt, sein. Hierdurch wird verhindert, dass sich der Abdeckring oder das Abdeckringsegment in Bezug auf den Grundkörper axial verschieben oder sogar vom Grundkörper lösen kann. Eine aus erster und zweiter Stirnwand kann z. B. von einem von dem Grundkörper separaten Teil gebildet sein und die andere aus erster und zweiter Stirnwand kann beispielsweise von dem Grundkörper selbst oder einem anderen an dem Grundkörper befestigten Teil gebildet werden. Das vom Grundkörper separate Teil kann z. B. ein Abdeckring, eine Abdeckplatte oder ein Deckel sein.

Eine beispielhafte Anwendung der Anzeigeeinrichtung findet sich in dem Zusammenhang mit einem Flüssigkeitsbehälter. Der Flüssigkeitsbehälter kann einen Aufnahmeraum zur Aufnahme einer Flüssigkeit und die hierin beschriebene Anzeigeeinrichtung umfassen. Der Aufnahmeraum kann über einen oder den oben genannten Fluidkanal, der in die sich ringförmig über den Umfang erstreckende Vertiefung mündet, insbesondere unterhalb des minimalen Flüssigkeitsstands oder an der tiefsten Stelle der Vertiefung, mit der Anzeigeeinrichtung verbunden sein. Der Fluidkanal kann mit einer Öffnung unterhalb des minimalen Flüssigkeitsstands in den Aufnahmeraum münden. Hierdurch können sich der Flüssigkeitsstand in der Anzeigeeinrichtung und der Flüssigkeitsstand in dem Aufnahmeraum nach dem hydrostatischen Paradoxon aneinander angleichen. Das hydrostatische Paradoxon bewirkt, dass Flüssigkeiten den ihnen zur Verfügung stehenden Raum aufgrund des hydrostatischen Drucks überall bis zur gleichen Höhe, dem Spiegel, füllen.

Somit entspricht die Höhe des Flüssigkeitsspiegels im Flüssigkeitsbehälter der Höhe des Spiegels der Flüssigkeit in der Anzeigeeinrichtung. Somit kann in der Anzeigeeinrichtung der Flüssigkeitsstand im Flüssigkeitsbehälter abgelesen werden.

Beispielsweise kann der Flüssigkeitsbehälter von einem Getriebe, insbesondere von einem oder mehreren Getriebegehäusen, gebildet werden, die den Aufnahmeraum einfassen oder umgeben. In dem Aufnahmeraum können sich Getriebekomponenten, wie z. B. Zahnräder, Wellen, Planetengetriebe usw. befinden, die eine Umsetzung einer Drehung einer Eingangswelle in eine Abtriebsdrehung bewirken und von der im Aufnahmeraum befindlichen Flüssigkeit geschmiert werden.

Ein bevorzugtes Getriebe kann z. B. ein erstes Gehäuse und eine Eingangswelle, die relativ zu dem ersten Gehäuse um eine Drehachse drehbar ist, und ein zweites Gehäuse, das relativ zu dem ersten Gehäuse um die Drehachse drehbar an dem zweiten Gehäuse, beispielsweise mittels einem, zwei oder noch mehr Drehlagern, insbesondere Wälzlagern, gelagert sein. Das Getriebe kann mindestens eine Planetenstufe, wie z. B. eine einzige, zwei, drei oder noch mehr Planetenstufen, umfassen, wobei bei mehreren Planetenstufen bevorzugt ist, dass diese kinematisch in Serie geschaltet sind. Eine Planetenstufe, auch Planetengetriebe genannt, umfasst ein Sonnenrad, mindestens ein, in der Regel jedoch mehrere Planetenräder, die mit dem Sonnenrad kämmen, einen Planetenträger, an dem das eine oder die mehreren Planetenräder um Drehachsen, die von der Drehachse des Sonnenrads beabstandet sind, relativ zu dem Planetenträger drehen können, wobei zwischen Planetenträger und Sonnenrad meist eine Relativbewegung um die Achse des Sonnenrads möglich ist. Ferner weist die Planetenstufe ein Hohlrad auf, welches mit dem einen oder den mehreren Planetenrädern kämmt und als Innenzahnrad ausgebildet ist. In einer Ausführungsform kann das Hohlrad von mindestens einer, zwei, drei oder allen Planetenstufen an dem zweiten Gehäuse gebildet sein.

Die mindestens eine Planetenstufe verbindet die Eingangswelle kinematisch so mit dem zweiten Gehäuse, dass eine Drehung der Eingangswelle eine über- oder untersetzte Drehung des zweiten Gehäuses relativ zu dem Gehäuse um die Drehachse unter Beibehaltung oder Änderung der Drehrichtung bewirkt. Wird die Drehung der Eingangswelle unter Drehzahlerhöhung an das zweite Gehäuse übertragen, ist die Drehung übersetzt. Wird die Drehung der Eingangswelle unter Drehzahlverringerung an das zweite Gehäuse übertragen, ist die Drehung untersetzt. Das erste Gehäuse und das zweite Gehäuse fassen gemeinsam einen Aufnahmeraum ein, in dem ein flüssiges Schmiermittel, insbesondere Schmieröl, und die mindestens eine Planetenstufe angeordnet sind. Die mindestens eine Planetenstufe ist zumindest teilweise unter den Flüssigkeitsspiegel des flüssigen Schmiermittels getaucht. Hierdurch wird eine Tauchschmierung realisiert, bei der nur Teile der Getriebekomponenten in das Schmiermittel getaucht sind. Wie eingangs angegeben, können für das Getriebe ein maximaler Flüssigkeitsstand und ein minimaler Flüssigkeitsstand festgelegt sein, zwischen denen sich der Flüssigkeitsspiegel für eine ordnungsgemäße Schmierung des Getriebes befinden soll.

Das Getriebe umfasst ferner eine hierin genannte Anzeigeeinrichtung, wobei der Grundkörper der Anzeigeeinrichtung ortsfest in Bezug auf das erste Gehäuse angeordnet ist, insbesondere dreh- und axialfest mit dem ersten Gehäuse verbunden ist. Der Abdeckring oder das Abdeckringsegment und insbesondere auch der Grundkörper können sich, beispielsweise konzentrisch, um die Drehachse der Eingangswelle erstrecken. Dadurch kann der Flüssigkeitsstand beidseitig der Eingangswelle abgelesen werden.

Der Aufnahmeraum ist über den Fluidkanal, der sich vorzugsweise zumindest teilweise in dem Grundkörper befindet und der in die sich zumindest teilweise, insbesondere ringförmig, über den Umfang und/oder die Drehachse erstreckende Vertiefung mündet, mit der Anzeigeeinrichtung flüssigkeitskommunizierend verbunden, so dass sich der Flüssigkeitsstand in der Anzeigeeinrichtung und der Flüssigkeitsstand in dem Aufnahmeraum nach dem hydrostatischen Paradoxon aneinander angleichen können.

Das Getriebe kann beispielsweise eine Fördereinrichtung und mindestens einen Fluidzuführkanal aufweisen, wobei die Fördereinrichtung ausgestaltet ist, Schmierflüssigkeit aus dem Aufnahmeraum über den Flüssigkeitsspiegel der Flüssigkeit im Aufnahmeraum zu fördern und durch den mindestens einen Fluidzuführkanal in die Anzeigeeinrichtung, insbesondere die Vertiefung, zu fördern. Der Flüssigkeitsstand in der Anzeigeeinrichtung gleicht sich an den Flüssigkeitsstand in dem Aufnahmeraum dadurch an, dass die Flüssigkeit aus der Anzeigeeinrichtung über den die Vertiefung und den Aufnahmeraum verbindenden Fluidkanal aus der Anzeigeeinrichtung in den Aufnahmeraum fließen kann. Die Anzeigeeinrichtung ist zwischen den von der Fördereinrichtung kommenden Fluidzuführkanal und den die Vertiefung mit dem Aufnahmeraum verbindenden Fluidabführkanal geschaltet oder angeordnet.

Beispielsweise kann ein erster Fluidzuführkanal die Fördereinrichtung und einen Vorraum und ein zweiter, als Überlauf dienender Fluidzuführkanal den Vorraum und die umlaufende Vertiefung fluidkommunizierend verbinden. Der Vorraum kann somit zwischen den ersten Fluidzuführkanal, der von der Fördereinrichtung kommt, und dem zweiten Fluidzuführkanal, der den Vorraum und die zumindest teilweise umlaufende Vertiefung fluidkommunizierend verbindet, angeordnet sein. Die Anzeigeeinrichtung oder die Vertiefung der Anzeigeeinrichtung kann zwischen dem zweiten Fluidzuführkanal und dem Fluidabführkanal, der die Vertiefung mit dem Aufnahmeraum fluidkommunizierend verbindet, angeordnet sein. Die Austrittsöffnung aus dem Vorraum in den zweiten Fluidzuführkanal ist vorzugsweise oberhalb des maximalen Flüssigkeitsstands oder der Markierung für den maximalen Flüssigkeitsstand der Anzeigeeinrichtung angeordnet. Die Austrittsöffnung aus dem Vorraum in den zweiten Fluidzuführkanal dient als Überlauf. Dadurch kann sich in dem Vorraum ein Flüssigkeitsspiegel des Schmiermittels einstellen, der oberhalb des maximalen Flüssigkeitsstands oder der Markierung für den maximalen Flüssigkeitsstand der Anzeigeeinrichtung angeordnet ist. Hierdurch wird es ermöglicht, bestimmte Stellen in dem Vorraum mit Schmiermittel zu versorgen, die oberhalb des maximalen Flüssigkeitsstands angeordnet sind. Durch die Fördereinrichtung kann bewirkt werden, dass unabhängig vom Flüssigkeitsstand in dem Aufnahmeraum ein konstanter Flüssigkeitsstand in dem Vorraum gebildet ist. Durch die Fördereinrichtung und die als Überlauf dienende Austrittsöffnung aus dem Vorraum wird ferner erreicht, dass die Komponenten im Vorraum stets mit frischem Schmiermittel versorgt werden, wodurch einer Überhitzung des Schmiermittels im Vorraum entgegengewirkt werden kann. Über die Anzeigeeinrichtung kann ferner kontrolliert werden, ob aus dem Vorraum Schmiermittel über den zweiten Fluidzuführkanal in die Vertiefung des Anzeigeraums fließt, wobei die Austrittsöffnung des zweiten Fluidzuführkanals in die Vertiefung vorzugsweise oberhalb des maximalen Flüssigkeitsspiegels angeordnet ist.

Der Grundkörper der Anzeigeeinrichtung, der in Weiterbildungen als Befestigungsgehäuse dienen kann, kann den Vorraum bilden oder umgeben, wie z. B. umfangsseitig und zumindest von einer Stirnseite her umgeben. Der Vorraum kann an einer Stirnseite offen sein und von einem separat an den Grundkörper anbringbaren oder befestigbaren Motor verschlossen werden. An dem Grundkörper kann ein für den Antrieb der Antriebswelle ausgebildeter Motor angebracht oder anbringbar sein. Insbesondere sind die Antriebswelle des Motors und die Eingangswelle des Getriebes verdrehfest um die Drehachse miteinander verbunden, so dass eine Drehung der Antriebswelle des Motors eine Drehung der Eingangswelle des Getriebes bewirkt, wenn der Motor an dem Grundkörper befestigt ist.

Das Schmiermittel in dem Vorraum dient insbesondere zum Schmieren einer Dichtung und/oder Wellen-Nabe-Verbindung, welche die drehfeste Verbindung zwischen der Antriebswelle des Motors mit der Eingangswelle des Getriebes bewirkt, um beispielsweise Reibkorrosion in der Wellen-Nabe-Verbindung vorzubeugen.

Die Erfindung lässt sich vorteilhaft bei einer Winde, insbesondere einer Zugmittelwinde oder Seilwinde, vorteilhaft einsetzen. Die Winde umfasst ein hierin beschriebenes Getriebe, ein Windengestell mit zumindest einer Wand, an der das erste Gehäuse des Getriebes verdrehfest befestigt ist, eine relativ zu dem Windengestell um die Drehachse drehbare, verdrehfest mit dem zweiten Gehäuse verbundene Windentrommel, wobei die Windentrommel auf einer Seite der Wand des Windengestells und die Anzeigeeinrichtung auf der anderen Seite der Wand des Windengestells angeordnet ist. Hierdurch kann die Anzeigeeinrichtung einfach abgelesen werden und der Spalt zwischen der Wand und der Windentrommel kleingehalten werden. Das Getriebe kann als Einschubgetriebe ausgestaltet sein, wobei das Getriebe über die Stirnseite der Trommel in die Trommel eingeführt ist, wobei das zweite Gehäuse, insbesondere ein Befestigungsflansch des zweiten Gehäuses mit Hilfe von mehreren Schraubenbolzen an der Windentrommel befestigt oder angeschraubt ist. Zumindest das zweite Gehäuse kann sich zumindest zum größten Teil innerhalb der Windentrommel befinden.

Die Erfindung wurde anhand von mehreren bevorzugten Ausführungen und Beispielen beschrieben. Im Folgenden werden bevorzugte Ausführungen anhand von Figuren beschrieben. Die dabei offenbarten Merkmale bilden je einzeln und in jeglicher Merkmalskombination den Gegenstand der Erfindung vorteilhaft weiter. Es zeigen:
- Figur 1: eine Seitenansicht einer Winde oder zumindest eines Teils davon, in einer Schnittdarstellung,
- Figur 2: eine Vorderansicht der Winde aus Figur 1 in einem Schnitt durch eine Anzeigeeinrichtung,
- Figur 3: einen Abstreifer entlang des Schnitts A-A
- Figur 4: einen vergrößerten Ausschnitt aus Figur 1 und
- Figur 5: eine Variante für die Anzeigeeinrichtung aus Figur 1.

In den Figuren wird eine Winde 1 oder zumindest ein Teil davon in verschiedenen Ansichten gezeigt.

### Winde/Getriebe

Die Winde 1 umfasst ein Windengestell 3, ein (Einschub-)Getriebe 10 und eine Windentrommel 2. Die Winde 1 kann ferner einen Antriebsmotor, der beispielsweise als Elektromotor oder als Hydromotor ausgebildet sein kann, umfassen, der an dem Getriebe 10 befestigt ist. Der Motor dient zum Antrieb der Winde 1.

Die Windentrommel 2 ist relativ zu dem Windengestell 3 um die Drehachse D für einen Hub- und Senkbetrieb in beide Drehrichtungen drehbar. Die Windentrommel 2 ist in der Figur nur vereinfacht und abschnittsweise dargestellt. Solche Windentrommeln sind allgemein bekannt.

Das Windengestell 3 weist zwei Seitenwände auf, zwischen denen die Windentrommel 2 angeordnet ist. Die Windentrommel 2 stützt sich auf einer Seite mittelbar über das Getriebe 10 an der Seitenwand und mit der anderen Seite ebenfalls mittelbar oder unmittelbar an der anderen Seitenwand des Windengestells ab. Beispielsweise kann auf der anderen Seite ein Lagerzapfen gebildet sein, über den sich die Windentrommel an dem Windengestell 3 stützt. Somit stützt sich die Windentrommel 2 beidseitig drehbar mittelbar oder unmittelbar an dem Windengestell 3 ab.

Das Getriebe 10 weist ein erstes Gehäuse 11 auf, welches verdrehfest und axial unverschiebbar an der in der Figur gezeigten Wand des Windengestells 3 befestigt ist. In dem gezeigten Beispiel ist das erste Gehäuse 11 mittels einer Vielzahl von Schraubenbolzen an dem Windengestell 3 befestigt. Die Winde 10 weist ein zweites Gehäuse 12 auf, welches über zwei Wälzlager 18 und 19 um die Drehachse D drehbar an dem ersten Gehäuse 11 gelagert ist. Das zweite Gehäuse 12 ist dreh- und axialfest mit der Windentrommel 2 gefügt, wie z. B. mittels einer Vielzahl von Schraubenbolzen. Ein zwischen dem ersten Gehäuse 11 und dem zweiten Gehäuse 12 gebildeter Ringspalt wird mittels einer Dichtung, insbesondere einer Radial-Wellendichtung abgedichtet, wodurch das erste Gehäuse 11 und das zweite Gehäuse 12 einen Aufnahmeraum 14 flüssigkeitsdicht abdichten, so dass eine in dem Aufnahmeraum 14 enthaltene Flüssigkeit, wie z. B. ein flüssiges Schmiermittel, insbesondere Schmieröl, in dem Aufnahmeraum 14 gehalten wird und nicht in die Umgebung abgegeben werden kann. Zweckmäßigerweise befinden sich die Lager 18 und 19 in dem Aufnahmeraum 14, um deren Schmierung sicherzustellen. Das insbesondere topfförmige zweite Gehäuse 12 wird zumindest größtenteils von der Windentrommel 2 umgeben. Bei dem Getriebe 10 handelt es sich somit um ein Einschubgetriebe, welches stirnseitig in die Windentrommel 2 eingefügt ist, um das Getriebe 10 platzsparend für eine kompakte Bauweise der Winde 1 anzubringen.

Die Winde 10 weist eine Eingangswelle 13 auf, die konzentrisch zur Drehachse D angeordnet und relativ zu dem ersten Gehäuse 11 um die Drehachse D drehbar ist. Die Eingangswelle 13 ist über ein Dreh-, insbesondere Wälzlager drehbar an dem ersten Gehäuse 11 gelagert. Der radiale Spalt zwischen durch ersten Gehäuse 11 und der Eingangswelle 13 wird mittels einer Dichtung, insbesondere eines Radial-Wellendichtrings abgedichtet, so dass keine Flüssigkeit aus dem Aufnahmeraum 14 über diese Dichtung austreten kann. Auch dieses Drehlager befindet sich zweckmäßigerweise zur Sicherstellung seiner Schmierung in dem Aufnahmeraum 14.

Das Getriebe 10 weist mehrere Planetenstufen 20, 30, 40 auf, welche die Eingangswelle 13 kinematisch so mit dem zweiten Gehäuse 12 verbinden, das eine Drehung der Eingangswelle 13 unter Drehzahlverringerung an das zweite Gehäuse 12 und somit an die Windentrommel 2 übertragen wird. Die Eingangswelle 13 ist verdrehfest mit einem Sonnenrad 21 der ersten Planetenstufe 20 verbunden bzw. bildet das erste Sonnenrad 21. Mehrere über den Umfang des Sonnenrads 21 verteilte und mit dem Sonnenrad 21 kämmende Planetenräder 22 sind um ihrer jeweiligen Drehachsen drehbar an einem Planetenträger 24 der ersten Planetenstufe 20 angeordnet. Das Hohlrad 23 der ersten Planetenstufe 20 wird von dem zweiten Gehäuse 12 gebildet und kämmt mit den Planetenrädern 22. Die Drehung der Eingangswelle 13 relativ zu dem ersten Gehäuse 11 bewirkt somit, dass der Planetenträger 24 relativ zu dem ersten Gehäuse 11 und dem zweiten Gehäuse 12 um die Drehachse D dreht. Der Planetenträger 24 ist verdrehfest, wie z. B. über eine Wellen-Nabe-Verbindung mit einem Sonnenrad 31 einer zweiten Planetenstufe 30 verbunden. Mehrere über den Umfang des Sonnenrads 31 verteilte Planetenräder 32 kämmen mit dem Sonnenrad 31 und sind um ihre jeweiligen Drehachsen drehbar an den Planetenträger 34 der zweiten Planetenstufe 30 gelagert. Das Hohlrad 33 der zweiten Planetenstufe 30 wird von dem zweiten Gehäuse 12 gebildet und kämmt mit den Planetenrädern 32. Die von dem Planetenträger 24 auf das Sonnenrad 31 übertragene Drehbewegung bewirkt somit eine Drehbewegung des Planetenträgers 34 relativ zu dem ersten Gehäuse 11 und dem zweiten Gehäuse 12 um die Drehachse D.

Der Planetenträger 34 ist um die Drehachse D verdrehfest mit einem Sonnenrad 41 einer dritten Planetenstufe 40 verbunden, beispielsweise mittels einer Wellen-Nabe-Verbindung. Über den Umfang des Sonnenrads 41 sind mehrere Planetenräder 42 angeordnet, welche mit dem Sonnenrad 41 kämmen. Die Planetenräder 42 sind jeweils um ihre Drehachsen drehbar an dem ersten Gehäuse 11, welches somit als Planetenträger dient, gelagert. Das Hohlrad 43 der dritten Planetenstufe 40 wird von dem zweiten Gehäuse 12 gebildet und kämmt mit den Planetenrädern 42. Dies ist eine von mehreren Möglichkeiten, wie mit Hilfe von einer oder mehreren Planetenstufen 20, 30, 40 eine Drehung der Eingangswelle 13 untersetzt an den Windentrommel 2 übertragen werden kann. Andere Ausführungen, welche dem ähnlichen Zweck dienen sind natürlich denkbar.

Für das Getriebe 10 ist ein maximaler Flüssigkeitsstand Sₘₐₓ und ein minimaler Flüssigkeitsstand Sₘᵢₙ vorgesehen, wobei der Flüssigkeitsstand der Schmierflüssigkeit, d. h. die Position oder Höhe des Flüssigkeitsspiegels höher oder gleich Sₘᵢₙ oder niedriger oder gleich Sₘₐₓ sein soll, um eine ordnungsgemäße Funktion des Getriebes 10 sicherzustellen. Sₘₐₓ und Sₘᵢₙ sind so gewählt, dass jedes der Planetenräder 22, 32, 42 bei seinem vollen Umlauf um die Drehachse D zumindest teilweise unter den Flüssigkeitsspiegel des Schmiermittels eintaucht. Das in dem Aufnahmeraum 14 enthaltene Schmiermittel kann somit die in dem Aufnahmeraum 14 enthaltenen Getriebe- und Lagerkomponenten während des Betriebs schmieren. Das Getriebe 10 ist so ausgelegt, dass die Drehachse D horizontal oder in etwa horizontal in Bezug auf die Schwerkraftrichtung, die vertikal verläuft, angeordnet ist.

### Bremse

Das Getriebe 10 kann optional eine Bremse 50 aufweisen, welche stirnseitig an dem Austritt der Eingangswelle 13 aus dem ersten Gehäuse 11 an dem ersten Gehäuse 11 angeordnet oder befestigt ist. Die Bremse 50 dient als Betriebs- und/oder Haltebremse für die Eingangswelle 13 und somit mittelbar auch für die Windentrommel 2. Eine Betriebsbremse ist ausgelegt, die Windentrommel 2 aus der Drehung bis zum Stillstand abzubremsen. Eine Haltebremse 2 ist ausgelegt, die Windentrommel 2 im Stillstand sicher festzuhalten, insbesondere ein Kriechen zu vermeiden.

Die Bremse 50 weist ein Bremsgehäuse 51 auf, welches verdreh- und axialfest mit dem ersten Gehäuse 11 verbunden oder gefügt ist, beispielsweise mittels mehrerer Schraubenbolzen. In kinematischer Hinsicht kann das Bremsgehäuse 51 als Teil des ersten Gehäuses 11 betrachtet werden. Die Bremse 50 weist einen relativ zu dem Bremsgehäuse 51 drehbaren Rotor 52 auf, der um die Drehachse D verdrehfest, in diesem Beispiel mittels einer Welle-Nabe-Verbindung 54, mit der Eingangswelle 13 verbunden ist. Die Bremse 50 weist mehrere als Lamellen ausgestaltete erste Bremskörper 58a, die um die Drehachse D verdrehfest mit dem Bremsgehäuse 51 verbunden sind und mehrere als Lamellen ausgestaltete zweite Bremskörper 58b auf, die um die Drehachse D verdrehfest mit dem Rotor 52 verbunden sind. In Richtung der Drehachse D sind abwechselnd erste Bremskörper 58a und zweite Bremskörper 58b angeordnet. Das heißt zwischen zwei Bremskörpern 58a befindet sich ein Bremskörper 58b und zwischen zwei Bremskörpern 58b befindet sich ein Bremskörper 58a. Die Bremse 50 weist ferner ein Druckstück 55 auf, welches die ersten und zweiten Bremskörper 58a, 58b in Richtung der Drehachse D gegeneinander drücken kann. Je nachdem, wie stark das Druckstück 55 in die ersten und zweiten Bremskörper 58a, 58b gegeneinander drückt, wird ein Bremsmoment erzeugt, welches auf die Eingangswelle 13 wirkt. Zwischen dem Druckstück 55 und dem Bremsgehäuse 51 ist ein Druckraum 57 gebildet, der über einen Anschluss oder Kanal mit einem kompressiblen oder inkompressiblen Medium, wie z. B. Druckluft oder Hydraulikflüssigkeit bedruckbar oder entlüftbar ist. Mindestens eine Feder 56, in diesem Beispiel eine Schraubenfeder, stützt sich an dem Druckstück 55 ab und ist so vorgespannt, dass es das Druckstück 55 in Richtung der Bremskörper 58a, 58b drückt, wodurch die mindestens eine Feder 56 über das Druckstück 55 die ersten und zweiten Bremskörper 58a, 58b gegeneinander drückt, insbesondere so stark gegeneinander drückt, dass die Haltebedingung erfüllt ist und die Windentrommel 2 im Stillstand gehalten oder bis zum Stillstand abgebremst werden kann, insbesondere dann, wenn der Druckraum 57 entlüftet ist. Wenn der Druckraum 57 mit dem kompressiblen oder inkompressiblen Medium bedruckt wird, wird die Feder 56 gespannt oder das Druckstück 55 von den Bremskörpern 58a, 58b weg bewegt, wodurch die von dem Druckstück 55 auf die ersten und zweiten Bremskörper 58a, 58b ausgeübte Kraft verringert wird. Hierdurch kann die Bremse 50 gelöst werden.

### Befestigungsgehäuse/Motoranschluss

Das Getriebe 10 weist ein Befestigungsgehäuse 101 auf, welches einen Grundkörper für die optional vorgesehene Anzeigeeinrichtung 100 bildet. Das Befestigungsgehäuse 101 bildet eine Befestigungsmöglichkeit für einen Motor (nicht dargestellt), insbesondere in Form eines Flansches, an dem der Motor bzw. das Motorgehäuse angeflanscht oder befestigt werden kann, insbesondere mittels mehrerer Schraubenbolzen. Das Befestigungsgehäuse 101 ist um die Drehachse D verdrehfest und axialfest mit dem Bremsgehäuse 51 oder mit dem ersten Gehäuse 11 verbunden, insbesondere mittels mehreren Schraubenbolzen. In kinematischer Hinsicht kann das Befestigungsgehäuse 101 als zum Bremsgehäuse 51 oder zum ersten Gehäuse 11 gehörig angesehen werden. Das Befestigungsgehäuse 101 bildete eine insbesondere zylindrische Innenumfangsfläche, welches den zum Motor hin offenen Vorraum 17 einfasst. Ferner bildet das Befestigungsgehäuse eine Stirnwand, welche den Vorraum 17 zur Bremse 50 oder zum ersten Gehäuse 11 hin begrenzt. Die offene Seite des Vorraums wird durch den Motor oder ein Gehäuse des Motors begrenzt, wenn der Motor an dem Befestigungsgehäuse 101 befestigt ist. Der Motor weist eine Antriebs- oder Motorwelle auf, welche den Vorraum 17 durchragt, wenn der Motor an dem Befestigungsgehäuse 101 angeordnet ist. Beispielsweise mittels einer formschlüssigen Wellen-Nabe-Verbindung kann die Antriebswelle des Motors mit der Eingangswelle 13 direkt oder indirekt über den Rotor 52 der optional vorhandenen Bremse 50 verbunden sein. Sollte eine Bremse 50 nicht vorhanden sein, kann die Verbindung zwischen der Antriebswelle des Motors und der Eingangswelle 13 ebenfalls direkt oder indirekt, wie z. B. über ein Zwischenstück erfolgen. In dem in der Figur gezeigten Beispiel weist der Rotor 52, der formschlüssig verdrehfest mit der Antriebswelle 13 verbunden ist, ein erstes Verbindungselement 53a, wie z. B. eine Innenverzahnung auf, in die ein zweites Verbindungselement der Motorwelle, wie z. B. eine Außenverzahnung zur Bildung einer Welle-Nabe-Verbindung 53 formschlüssig eingreift.

Die Eingangswelle 13 und die Antriebswelle des Motors sind konzentrisch zur Drehachse D angeordnet und um diese drehbar. Der Rotor 52 kann einteilig oder mehrteilig sein.

In dem zwischen dem Rotor 52, insbesondere zwischen dem das erste Verbindungselement 53a bildenden Abschnitt des Rotors 52, und dem Befestigungsgehäuse 101 gebildeter Ringspalt ist ein Dichtring 112, beispielsweise in der Gestalt eines am Befestigungsgehäuse 101 befestigten Radial-Wellendichtrings, angeordnet, um den Vorraum 17 zu dem Aufnahmeraum 14 oder der Bremse 50 hin flüssigkeitsdicht abzudichten. Der Dichtring 112 ist konzentrisch um die Drehachse D angeordnet.

In dem in der Figur gezeigten Beispiel ist die von dem Rotor 52 und der Eingangswelle 13 gebildete Welle-Nabe-Verbindung 54 flüssigkeitskommunizierend mit dem Vorraum 17 verbunden. Ein Dichtring 59 dichtet den Spalt zwischen dem Rotor 52 und der Eingangswelle 13 ab, wobei die Welle-Nabe-Verbindung 54 zwischen dem Vorraum 17 und dem Dichtring 59 angeordnet ist. Der Dichtring 59 und die Welle-Nabe-Verbindung 54 kann statt einem Rotor 52 für die Bremse 50 an einem Verbindungsstück vorgesehen sein, beispielsweise wenn keine Bremse 50 an dieser Stelle vorgesehen ist.

Das erste Verbindungselement 53a oder die Welle-Nabe-Verbindung 53 ist flüssigkeitskommunizierend mit dem Vorraum 17 verbunden. Das Befestigungsgehäuse 101 kann ein oder mehrteilig ausgeführt sein.

Die Wand des Windengestells 3, an der das erste Gehäuse 11 befestigt ist, ist zwischen der Windentrommel 2 und dem Befestigungsgehäuse 101 angeordnet. Das heißt, dass die Windentrommel 2 auf einer Seite der Wand und das Befestigungsgehäuse 101 auf der anderen Seite der Wand angeordnet ist, wobei die Wand eine Öffnung aufweist, durch die das Getriebe 10 ragt, so dass das Befestigungsgehäuse 101 fest mit dem ersten Gehäuse 11 verbunden ist. In dem in der Figur gezeigten Beispiel ragt das Bremsgehäuse 51 durch die Öffnung der Wand und verbindet dort das Befestigungsgehäuse 101 mit dem ersten Gehäuse 11. Statt dem Bremsgehäuse 51 könnte auch allgemein ein Verbindungsabschnitt des Befestigungsgehäuses 101 oder des ersten Gehäuses 11 oder ein separates Verbindungsgehäuse durch die Öffnung der Wand ragen, insbesondere dann, wenn keine Bremse 50 an dieser Stelle vorgesehen ist.

### Schmiersystem/Fördereinrichtung

Grundsätzlich wäre es denkbar, dass der Vorraum 17 mit Schmiermittel, wie z. B. Schmieröl gefüllt ist, um die Welle-Nabe-Verbindung 53 und ggf. auch die Welle-Nabe-Verbindung 54 zu schmieren und dadurch vor Reibkorrosion zu schützen. Dadurch kann sich jedoch das Problem ergeben, dass sich das flüssige Schmiermittel im Vorraum 17 auf Temperaturen erwärmt, die das Schmiermittel und/oder den Dichtring 112 beeinträchtigen. Daher sieht das Getriebe 10 ein Schmiersystem vor, welches während des Betriebs des Getriebes 10 für einen kontinuierlichen Austausch des Schmiermittels im Vorraum 17 sorgt.

Das Schmiersystem bzw. das Getriebe 10 umfasst eine Fördereinrichtung 12a, 16, welche das Schmiermittel aus dem Aufnahmeraum 14 über einen Fluidzuführkanal 15 in den Vorraum 17 fördert. Die Fördereinrichtung 12a, 16 ist angepasst, das flüssige Schmiermittel über den maximalen Flüssigkeitsstand Sₘₐₓ zu fördern oder zu heben und in den Fluidzuführkanal 15 zu fördern. Die Fördereinrichtung 12a, 16 kann beispielsweise eine an sich bekannte Schmiermittelpumpe sein oder so ausgebildet sein, wie in der Figur gezeigt und weiter unten beschrieben wird. Der Fluidzuführkanal 15 weist mehrere Teilabschnitte auf, wobei zumindest ein Teilabschnitt in dem ersten Gehäuse 11 gebildet ist, insbesondere in der Gestalt von einer oder mehreren Bohrungen. Ein weiterer Teilabschnitt kann von dem Bremsgehäuse 51 oder einem alternativ vorhandenen Verbindungsabschnitt oder Verbindungsgehäuse gebildet werden. Der Teilabschnitt ist ebenfalls in der Gestalt einer Bohrung ausgeführt. Ein weiterer Teilabschnitt des Fluidzuführkanals 15 wird von dem Befestigungsgehäuse 101 gebildet. Der Fluidzuführkanal 15 mündet in den Vorraum 17 mit einer Eintrittsöffnung, die bevorzugt oberhalb eines Flüssigkeitsstands Sᵥₒᵣ im Vorraum 17 angeordnet ist.

Der Vorraum 17 ist über mindestens einen Fluidkanal 107, 106 mit dem Aufnahmeraum 14 verbunden, wobei der mindestens eine Fluidkanal 107, 106 bevorzugt unterhalb des minimalen Flüssigkeitsspiegels Sₘᵢₙ in den Vorraum 14 mündet. Die Austrittsöffnung des mindestens einen Fluidkanals 107, 106, mit der dieser aus dem Vorraum 107 führt, ist bevorzugt oberhalb des maximalen Flüssigkeitsstands Sₘₐₓ des Aufnahmeraums 14 angeordnet. Die Austrittsöffnung 107a und die Eintrittsöffnung in den Aufnahmeraum 14 sind über den mindestens einen Fluidkanal 107, 106 flüssigkeitskommunizierend verbunden.

Die Austrittsöffnung 107a ist oberhalb des untersten Punkts des ersten Verbindungselements 53a, vorzugsweise oberhalb des untersten Punkts der Welle-Nabe-Verbindung 54 angeordnet. Da durch die Fördereinrichtung 12a, 16 während der Drehung des Getriebes 10 Schmiermittel über den Fluidzuführkanal 15 in den Aufnahmeraum 17 gefördert wird und die Austrittsöffnung 107a als Überlauf wirkt, stellt sich in dem Aufnahmeraum 17 ein Flüssigkeitsstand Sᵥₒᵣ ein, der im Wesentlichen konstant und unabhängig von dem Flüssigkeitsstand im Aufnahmeraum 14 ist. Dadurch, dass die Austrittsöffnung 107a oberhalb des untersten Punkts der Wellen-Nabe-Verbindung 53 oder 54 angeordnet ist, wird sichergestellt, dass die Welle-Nabe-Verbindung 53, 54 mit Schmiermittel benetzt bzw. geschmiert wird, wodurch ein Verschleiß der Wellen-Nabe-Verbindungen 53, 54 vermieden wird. Außerdem wird durch den permanenten Austausch des Schmiermittels im Vorraum 17 während des Betriebs des Getriebes 10 verhindert, dass sich das Schmiermittel im Vorraum 17 auf Temperaturen erhitzt, die das Schmiermittel oder den Dichtring 112 beeinträchtigen können. Auch der Dichtring 112 liegt zumindest teilweise unterhalb des Flüssigkeitsstands Sᵥₒᵣ.

Optional kann die Austrittsöffnung 107a unterhalb des obersten Punkts des ersten Verbindungselements 53a bzw. der Welle-Nabe-Verbindung 53 und/oder unterhalb des obersten Punkts der Welle-Nabe-Verbindung 54 angeordnet sein. Dadurch wird erreicht, dass die von dem Vorraum 17 abgewandt an den Wellen-Nabe-Verbindungen 53, 54 liegenden Bereiche entlüftet werden können, wodurch eine bessere Schmierung der Wellen-Nabe-Verbindungen 53, 54 erzielt werden kann. Alternativ oder zusätzlich kann die Austrittsöffnung 107a oberhalb der Drehachse D angeordnet sein.

Der Flüssigkeitsstand in dem Aufnahmeraum 14 oder in dem Vorraum 17 kann beispielsweise in einer herkömmlichen Weise mit dem Ölmessstab, einem Schauzylinder oder einem Schauglas überprüft werden. Bevorzugt kann der Flüssigkeitsstand jedoch mit einer Anzeigeeinrichtung 100, wie sie in der Figur gezeigt und weiter unten beschrieben wird, visuell anhand der Höhe oder der Position des Flüssigkeitsspiegels visuell abgelesen werden.

Ein Abschnitt des mindestens einen Fluidkanals 107, 106 ist beispielsweise in Gestalt einer oder mehrerer Bohrungen von dem Befestigungsgehäuse 101 gebildet. Ein Abschnitt des mindestens einem Fluidkanals 107, 106 kann von dem optional vorhandenen Bremsgehäuse 51 oder dem ersten Gehäuse 11 oder einem separaten Verbindungsgehäuse gebildet werden. Ein Abschnitt des Fluidkanals 107, 106 wird von dem ersten Gehäuse 11 gebildet, welches auch die Eintrittsöffnung in den Aufnahmeraum 14 bildet, die im Hinblick auf die in der Figur gezeigte Anzeigeeinrichtung 100 bevorzugt unter dem Flüssigkeitsstand Sₘᵢₙ angeordnet sein kann.

An dem zweiten Gehäuse 12 ist eine Förderfläche 12a gebildet, deren Flächennormale in etwa parallel zur Drehachse D weist und/oder sich insbesondere ringförmig um die Drehachse D erstreckt. Die Förderfläche 12a erstreckt sich teilweise unter den minimalen Flüssigkeitsspiegel Sₘᵢₙ, so dass bei einer Drehung des zweiten Gehäuses 12 um die Drehachse D die Förderfläche 12a durch das flüssige Schmiermittel im Aufnahmegehäuse 14 bewegt wird, wobei die Förderfläche 12a mit einem Schmiermittelfilm benetzt ist, wenn sie sich aus dem Schmiermittelsumpf heraus nach oben bewegt.

Die Fördereinrichtung 12a, 16 weist außerdem einen Abstreifer 16 auf, der entlang der Drehachse D verschiebbar von dem ersten Gehäuse 11 gelagert ist. Zwischen dem ersten Gehäuse 11 und dem Abstreifer 16 ist eine Feder angeordnet, welche so vorgespannt ist, dass sie den Abstreifer 16 gegen die Förderfläche 12a drückt. Alternativ kann der Abstreifer mit einem, hier axialen, Spalt, der gleich oder kleiner als 4 mm, gleich oder kleiner als 3 mm oder gleich oder kleiner als 2 mm ist, von der Förderfläche beabstandet sein, wobei der Abstreifer 16 dann nicht von einer Feder vorgespannt sein braucht. Der Abstreifer 16 kann beispielsweise von dem ersten Gehäuse 11 gebildet oder verschiebefest mit dem ersten Gehäuse 11 gefügt sein. Der beim Durchlauf der Förderfläche 12a durch das Schmiermittel auf der Förderfläche 12a entstehende Schmiermittelfilm wird von dem Abstreifer 16 von der Förderfläche 12a abgestreift bzw. abgenommen. Der Fluidzuführkanal 15 ist in Bezug auf den Abstreifer 16 so angeordnet, dass das abgestreifte Schmiermittel in dem wenigstens einen Fluidzuführkanal 15 gelangt. Der Abstreifer 16 weist eine Wand 16a auf, deren Stirnseite an der Förderfläche 12a anliegt oder zwischen der und der Förderfläche 12a der Spalt besteht. Die Seitenfläche 16d der Wand 16a streift den Flüssigkeitsfilm von der Förderfläche 12a ab und führt ihn auf eine rinnenartige Fläche 16b, die sich von der Stirnseite, die an der Förderfläche 12a anliegt oder an der der Spalt angeordnet ist, zu dem Fluidzuführkanal 15 erstreckt, so dass abgestreifte Schmiermittel von der Seitenfläche 16d über die rinnenartige Fläche 16 in den Fluidzuführkanal 15 gelangt. Die Wand 16a weist beidseitig eine Seitenfläche 16d und eine rinnenartige Fläche 16b auf, wodurch das Schmiermittel sowohl beim Vorwärtslauf als auch beim Rückwärtslauf des Getriebes 10 von der Förderfläche 12a abgestreift und in den Fluidzuführkanal 15 gefördert wird. Der Fluidzuführkanal 15 mündet zu dem Ende des Abstreifers 16, welches der Stirnfläche, die an der Förderfläche 12a anliegt, entgegengesetzt ist. In der gezeigten Ausführung ist der Abstreifer 16 in einer zylindrischen Bohrung verschiebbar geführt, die in etwa konzentrisch zu dem Fluidzuführkanal 15 oder zu einer Bohrung des Fluidzuführkanals 15 angeordnet ist, der oder die in die zylindrische Bohrung mündet. Der Abstreifer 16 weist eine Basis 16c auf, welche die rinnenartige Fläche 16b und eine zylindermantelabschnittsförmige Führungsfläche bildet, die von der zylindrischen Bohrung geführt wird. Die Wand 16a bildet an ihrem von der Basis 16c abragenden Ende ebenfalls einen zylindermantelförmigen Abschnitt, die ebenfalls von der zylindrischen Bohrung geführt wird.

Optional kann das Getriebe 10 an dem Teil, an dem die Förderfläche 12a gebildet ist, oder an dem zweiten Gehäuseteil 12 oder einem Planetenträger eine oder mehrere insbesondere einseitig offene Förderzellen 12b aufweisen, die dazu ausgebildet sind, dass sie sich während des Durchlaufs durch das Schmiermittel füllen und Schmiermittel, insbesondere über die Öffnung, zu dem Abstreifer 16 oder der Förderfläche 12a hin abgeben. Dadurch kann noch mehr Schmiermittel gefördert und optional in den Fluidzuführkanal 15 geleitet werden als mit der Förderfläche 12a allein. Das Schmiermittel aus der mindestens einen Förderzelle 12b kann aufgrund der Schwerkraft und/oder der Zentrifugalkraft auf die Förderfläche 12a und/oder den Abstreifer 16 fließen oder abgegeben werden.

In dem gezeigten Beispiel sind mehrere um die Drehachse D verteilt angeordnete Förderzellen 12b gebildet. Jede der Förderzellen 12b ist zu ihren benachbarten Förderzellen 12b mittels jeweils einer insbesondere rippenförmigen Wand getrennt. Die Förderzellen 12b sind zu dem Abstreifer 16 oder der Förderfläche 12a oder dem Motor oder Vorraum 17 hin einseitig offen, damit das Schmiermittel aus den Förderzellen 12b dorthin abgegeben werden kann. Die Förderzellen 12b sind außenumfangsseitig der Förderfläche 12a angeordnet. Die Förderzellen 12b können beispielsweise in einer Hinterschneidung des zweiten Gehäuses 12, die zwischen dem Abschnitt des zweiten Gehäuses 12, der den Lagersitz für das Wälzlager 19 bildet, und dem Abschnitt der die Außenwand des zweiten Gehäuses 12 bildet angeordnet sein.

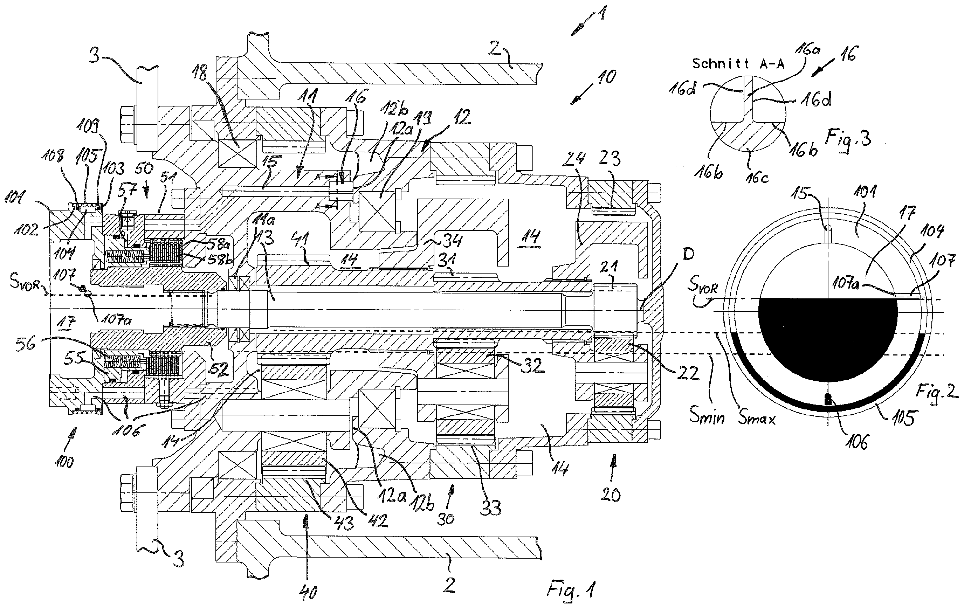

In einer Variante mit einem Auffänger (nicht gezeigt), die beispielsweise ohne Förderfläche 12a und/oder Abstreifer 16 auskommen kann, können die eine oder mehreren Förderzellen 12b wie in der Figur 1 dargestellt angeordnet sein. Der Auffänger kann an dem ersten Gehäuse 11 angeordnet oder davon gebildet und in Bezug auf die mindestens eine Förderzelle 12b so angeordnet sein, dass aus der zu dem Auffänger hin offenen Förderzelle 12b Schmiermittel an den Auffänger fließen oder abgeben werden kann. Der Auffänger kann flüssigkeitskommunizierend mit dem Fluidzuführkanal 15 verbunden sein bzw. der Flüssigkeitszuführkanal 15 kann in den Auffänger münden.

### Anzeigeeinrichtung

Das Befestigungsgehäuse 101 bildet oder umfasst einen Grundkörper 101, der eine erste Sitzfläche 102 und eine zweite Sitzfläche 103 bildet, die sich über den Umfang des Grundkörpers 101, insbesondere konzentrisch, um die Drehachse D erstrecken, in dem gezeigten Beispiel kreisringförmig. Zwischen der ersten Sitzfläche 102 und der zweiten Sitzfläche 103 ist eine sich über den Umfang des Grundkörpers 101, insbesondere kreisringförmig erstreckende Vertiefung 104 angeordnet. Die Vertiefung 104 ist in dem gezeigten Beispiel eine Nut oder Ringnut, die sich um die Drehachse D erstreckt. Ein transparenter Abdeckring 105, beispielsweise aus Glas oder PMMA, der die erste Sitzfläche 102, die zweite Sitzfläche 103 und die Vertiefung 104 über den Umfang umgibt, begrenzt die Vertiefung 104 über ihren Umfang. Der Abdeckring 105 kann vollständig oder zumindest abschnittsweise transparent sein. Der Abdeckring kann mindestens an der oder den Stellen transparent sein, an dem später ein Flüssigkeitsspiegel abgelesen werden soll. Der Abdeckring 105 umgibt die erste Sitzfläche 102, die zweite Sitzfläche 103 und die Vertiefung 104 über deren Umfang. Der Abdeckring 105 begrenzt die als Nut ausgestaltete Vertiefung 104, die radial von der Drehachse D wegweisend offen ist. Der von der Vertiefung 104 zwischen den seitlichen Nutflanken 104a, 104b und den Nutgrund 114 und dem Abdeckring 105 eingefasste Ringraum dient zur Aufnahme des flüssigen Schmiermittels, dessen Flüssigkeitsstand oder dessen Position des Flüssigkeitsspiegels von außen durch den Abdeckring 105 hindurch visuell abgelesen werden soll. Die Sitzflächen 102, 103 können als Dichtflächen ausgebildet sein oder mit dem Innenumfang des Abdeckrings 105 verklebt sein, wodurch verhindert wird, dass das flüssige Schmiermittel durch den Fügespalt zwischen den Sitzflächen 102, 103 und dem Innenumfang des Abdeckrings aus der Vertiefung an die Umgebung abgegeben werden kann. In den gezeigten Beispielen sind an der ersten Sitzfläche 102 und an der zweiten Sitzfläche 103 jeweils ein Dichtring 108, 109 angeordnet, die sich mit den Sitzflächen 102, 103 über den Umfang und/oder um die Drehachse D erstreckt. In den gezeigten Beispielen dienen die Dichtringe 108, 109 zur Abdichtung des Fügespalts zwischen den Sitzflächen 102, 103 nach außen. Der Dichtring 108, 109 sitzt in einer Ringnut, die in der ersten Sitzfläche 108 bzw. zweiten Sitzfläche 109 gebildet ist und sich über den Umfang der Sitzflächen 102, 103 erstreckt. Dadurch wird eine Montage des Abdeckrings 105 am Grundkörper 101 erleichtert, da verhindert wird, dass die Dichtringe 108, 109 beim Aufschieben des Abdeckrings 105 in Richtung der Drehachse D über die zweite Sitzfläche 103, die Vertiefung 104 und die erste Sitzfläche 102 verschoben werden, wodurch Dichtigkeitsprobleme vermieden werden können.

Der Grundkörper 101 bildet eine Stirnfläche, an der eine axiale Stirnfläche des Abdeckrings 105 anliegt und die die erste Sitzfläche 102 begrenzt. Ein ringförmiger Deckel, der eine zweite Stirnwand 111 bildet, ist vorgesehen, um den Abdeckring 105 zwischen der ersten Stirnwand 110 und der zweiten Stirnwand 111 einzufassen, um eine Verschiebung des Abdeckrings 105 relativ zu dem Grundkörper 101 in Richtung der Drehachse D zu verhindern.

Der Fluidkanal 106 mündet mit einer Öffnung in den Nutgrund oder allgemein in die Vertiefung 104 und andererseits mit einer Öffnung in den Aufnahmeraum 14, so dass der Aufnahmeraum 14 und der von der Vertiefung 104 gebildete Raum flüssigkeitskommunizierend verbunden sind. Die Öffnungen liegen unterhalb des minimalen Flüssigkeitsstands, so dass sich der Flüssigkeitsstand in der Anzeigeeinrichtung und der Flüssigkeitsstand in dem Aufnahmeraum 14 nach dem hydrostatischen Paradoxon aneinander angleichen. Dadurch kann der Flüssigkeitsstand des in den Ringraum befindlichen flüssigen Schmiermittels durch den Abdeckring 105 visuell abgelesen werden. Aufgrund der Tatsache, dass sich der Flüssigkeitsspiegel im Ringraum und der Flüssigkeitsspiegel in dem Aufnahmeraum 14 aneinander angleichen, kann somit an der Anzeigeeinrichtung 100 der Flüssigkeitsstand im Aufnahmeraum 14 ermittelt werden. Der von der Vertiefung 104 gebildete Ringraum und der Vorraum 17 sind über einen Fluidkanal 107 flüssigkeitskommunizierend verbunden. Der Fluidkanal 107 wird von dem Grundkörper 101 gebildet oder ist oder umfasst eine Bohrung im Grundkörper 101. Die Austrittsöffnung 107a ist zweckmäßigerweise so angeordnet wie weiter oben beschrieben wurde. Die Eintrittsöffnung des Fluidkanals 107 in die Vertiefung 104 kann auf gleicher Höhe wie die Eintrittsöffnung 107a oder weiter unten liegen, beispielsweise unterhalb des maximalen Flüssigkeitsstands oder des minimalen Flüssigkeitsstands. Sofern die Eintrittsöffnung in die Vertiefung 104 oberhalb des maximalen Flüssigkeitsstands Sₘₐₓ liegt kann über den Abdeckring 105 vorteilhaft und zusätzlich zu der Ermittlung des Flüssigkeitsspiegels festgestellt werden, ob Schmiermittel aus dem Vorraum 17 in den Ringraum fließt, wodurch festgestellt werden kann, ob das Schmiersystem ordnungsgemäß funktioniert. Das aus dem Vorraum 17 in den Ringraum fließende Schmiermittel führt zu keiner oder zu keiner wesentlichen Erhöhung des Flüssigkeitsstands, da sich der Flüssigkeitsstand in der Anzeigeeinrichtung 100 und der Flüssigkeitsstand in dem Aufnahmeraum 14 dadurch angleichen, dass Flüssigkeit aus dem Ringraum über dem Fluidkanal 106 in den Aufnahmeraum 14 fließt. Beispielsweise kann es vorteilhaft sein, dass der insbesondere kleinste Strömungsquerschnitt des Fluidkanals 106 größer ist als der, insbesondere kleinste Strömungsquerschnitt des Fluidkanals 107.

Die Anzeigeeinrichtung 100, insbesondere der Abdeckring 105 kann eine Markierung für den minimalen Flüssigkeitsstand und/oder eine Markierung für den maximalen Flüssigkeitsstand aufweisen, wodurch auf eine einfache Weise festgestellt werden kann, ob sich der Flüssigkeitsstand in der Anzeigeeinrichtung 100 und in dem Aufnahmeraum 14 im Soll, d. h. zwischen Sₘᵢₙ und Sₘₐₓ befinden. Sollte dies nicht der Fall sein, kann durch Hinzufügen oder Entnehmen von Schmiermittel in das oder aus dem Getriebe 10 der Flüssigkeitsstand wieder ins Soll gebracht werden. Ein besonderer Vorteil der in der Figur gezeigten Anzeigeeinrichtung 100 ist, dass der Flüssigkeitsstand von zwei Seiten her abgelesen werden kann.

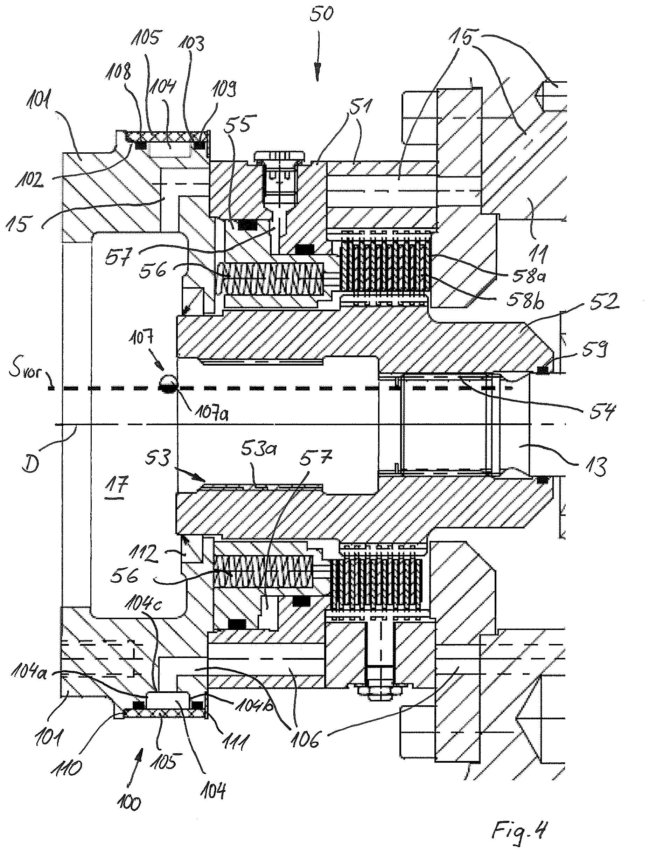

Die Anzeigeeinrichtung 100 aus den Figuren 1 bis 4 kann dahingehend modifiziert werden, dass der Abdeckring 105 ein sich nur teilweise über den Umfang ersteckendes Abdeckringsegment ist, dass die mindestens eine Sitzfläche 102, 103 und die Vertiefung sich nur teilweise über den Umfang erstrecken und dass die Dichtungen 108, 109 nicht zwingend als Dichtring ausgestaltet sein müssen.

In Ausführungen mit einem Abdeckringsegment können seine in Umfangsrichtung weisenden Enden oberhalb des maximalen Flüssigkeitsstands oder oberhalb der Drehachse oder oberhalb der Austrittsöffnung 107a angeordnet sein, wobei sich das Abdeckringsegment zwischen seinen Enden über die Unterseite oder den tiefsten Punkt der Anzeigeeinrichtung erstreckt. Ein Abdeckringsegment kann beispielsweise dann von Vorteil sein, wenn bauartbedingt ein Abdeckring nicht möglich ist oder einen höheren Herstellungsaufwand bedeuten würde. Ein Abdeckring hat gegenüber dem Abdeckringsegment gewisse Vorteile hinsichtlich der Stabilität und ist etwas einfacher abzudichten als ein Abdeckringsegment.

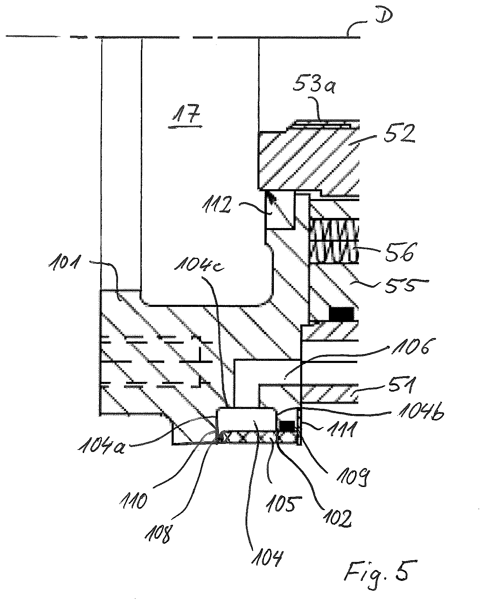

Die in Figur 5 gezeigte Variante der Anzeigeeinrichtung unterscheidet sich von der Ausführung aus den Figuren 1 bis 4 dadurch, dass die Dichtung 108 zwischen der Stirnfläche 110 und einer Stirnfläche des Abdeckrings 105 oder Abdeckringsegments eingeklemmt ist und daran dichtend anliegt. Somit kann - wie in Figur 5 gezeigt - eine der Sitzflächen 102 oder 103 aus der Ausführung aus den Figuren 1 bis 4 beispielsweise entfallen oder braucht nicht zwingend für das Zusammenwirken mit der Dichtung 108 gestaltet sein. Die nutförmige Vertiefung 104 wird von der Nutflanke 104b, an der die Sitzfläche 102 anschließt, und von der Stirnwand 110 des Grundkörpers 101, an der die Dichtung 108 anliegt und welche die Nutflanke 104 a bildet, begrenzt. Im Übrigen gelten die Merkmale der Ausführung aus den Figuren 1 bis 4 einschließlich der Modifikation auch für die Variante aus Figur 5.

**Bezugszeichenliste**

| | | | |
|---|---|---|---|
| 1 | Seilwinde | 50 | Bremseinrichtung |
| 2 | Windentrommel | 51 | Bremsgehäuse |
| 3 | Windengestell | 52 | Rotor |
| | | 53 | Welle-Na be-Verbindung |
| 10 | Getriebe | 53a | erstes Verbindungselement |
| 11 | erstes Gehäuse | 54 | Welle-Nabe-Verbindung |
| 11a | Dichtring | 55 | Druckstück |
| 12 | zweites Gehäuse | 56 | Feder |
| 12a | Förderfläche | 57 | Druckraum |
| 12b | Förderzelle | 58a | erster Bremskörper/Lamellen |
| 13 | Antriebswelle | 58b | zweiter Bremskörper/Lamellen |
| 14 | Aufnahmeraum | 59 | Dichtring |
| 15 | Fluidzuführkanal | | |
| 16 | Abstreifer | 100 | Anzeigeeinrichtung |
| 16a | Wand | 101 | Grundkörper/Befestigungsgehäuse |
| 16b | rinnenartige Fläche | 102 | erste Sitzfläche |
| 16c | Basis | 103 | zweite Sitzfläche |
| 16d | Seitenfläche | 104 | Vertiefung/Nut/Ringnut |
| 17 | Vorraum | 104a | erste Nutflanke |
| 18 | Wälzlager | 104b | zweite Nutflanke |
| 19 | Wälzlager | 104c | Nutgrund |
| | | 105 | Abdeckring |
| 20 | erste Planetenstufe | 106 | Fluidkanal |
| 21 | Sonnenrad | 107 | Fluidkanal/Ablaufkanal |
| 22 | Planetenrad | 107a | Austrittsöffnung |
| 23 | Hohlrad | 108 | Dichtung/Dichtring |
| 24 | Planetenträger | 109 | Dichtung/Dichtring |
| | | | |
| 30 | zweite Planetenstufe | 110 | erste Stirnwand |
| 31 | Sonnenrad | 111 | zweite Stirnwand |
| 32 | Planetenrad | 112 | Dichtring |
| 33 | Hohlrad | | |
| 34 | Planetenträger | D | Drehachse |
| | | Sₘₐₓ | maximaler Flüssigkeitsstand |
| 40 | dritte Planetenstufe | Sₘᵢₙ | minimaler Flüssigkeitsstand |
| 41 | Sonnenrad | Sᵥₒᵣ | Flüssigkeitsstandvorraum |
| 42 | Planetenrad | | |
| 43 | Hohlrad | | |

## Patentansprüche

1. Anzeigeeinrichtung (100), an der ein Flüssigkeitsstand, insbesondere ein Ölstand, visuell ablesbar ist, die Anzeigeeinrichtung (100) umfassend:
a) einen Grundkörper (101), der mindestens eine erste Sitzfläche (102) bildet, die sich zumindest teilweise über den Umfang des Grundkörpers (101) erstreckt, und
b) eine sich zumindest teilweise über den Umfang des Grundkörpers (101) erstreckende Vertiefung (104),
**gekennzeichnet durch**
c) einen zumindest abschnittsweise transparenten Abdeckring (105) oder ein zumindest abschnittsweise transparentes Abdeckringsegment, der oder das die erste Sitzfläche (102) abdeckt und die Vertiefung (104) mit seiner Innenfläche abdeckt oder begrenzt, wobei der von der Vertiefung (104) und dem Abdeckring (105) oder Abdeckringsegment eingefasste Raum zur Aufnahme der Flüssigkeit, deren Stand abgelesen werden soll, dient.

2. Anzeigeeinrichtung (100) nach Anspruch 1, **dadurch gekennzeichnet, dass** der Grundkörper (101) eine zweite Sitzfläche (103) bildet, die sich zumindest teilweise über den Umfang des Grundkörpers (101) erstreckt, wobei die Vertiefung (104) zwischen der ersten Sitzfläche (102) und der zweiten Sitzfläche (103) angeordnet ist und wobei der Abdeckring (105) die erste Sitzfläche (102) und die zweite Sitzfläche (103) abdeckt und die Vertiefung (104) mit seiner Innenfläche abdeckt oder begrenzt.

3. Anzeigeeinrichtung (100) nach Anspruch 1 oder 2, **dadurch gekennzeichnet, dass** die Vertiefung (104) eine sich zumindest teilweise über den Umfang erstreckende, zum Abdeckring (105) oder Abdeckringsegment offene Nut ist, die mittels des Abdeckrings (105) oder des Abdeckringsegments verschlossen ist.

4. Anzeigeeinrichtung (100) nach Anspruch 3, **dadurch gekennzeichnet, dass** die Nut (104) mit ihren seitlichen Nutflanken (104a, 104b) und ihrem Nutgrund (104c) und der Abdeckring (105) oder das Abdeckringsegment einen sich zumindest teilweise über den Umfang erstreckenden Raum oder Ringraum zur Aufnahme der Flüssigkeit, deren Stand abgelesen werden soll, begrenzen oder einfassen.

5. Anzeigeeinrichtung (100) nach Anspruch 3 oder 4, **gekennzeichnet durch** einen Fluidkanal (106), der durch den Nutgrund (104c) der Nut (104) hindurch in die sich zumindest teilweise über den Umfang erstreckende Nut (104) mündet.

6. Anzeigeeinrichtung (100) nach einem der vorhergehenden Ansprüche, **dadurch gekennzeichnet, dass** die Anzeigeeinrichtung (100) eine Markierung für einen minimalen Flüssigkeitsstand aufweist, wobei ein Fluidkanal (106) an einer Stelle in die Vertiefung (104) mündet, die unterhalb der Markierung für den minimalen Flüssigkeitsstand oder bezogen auf die Schwerkraftrichtung am tiefsten Punkt der Vertiefung (104) angeordnet ist.

7. Anzeigeeinrichtung (100) nach einem der vorhergehenden Ansprüche, **dadurch gekennzeichnet, dass** die Anzeigeeinrichtung (100) eine Markierung für einen maximalen Flüssigkeitsstand aufweist, wobei ein Fluidkanal (107) an einer Stelle in die Vertiefung (104) mündet, die oberhalb der Markierung für den maximalen Flüssigkeitsstand angeordnet ist.

8. Anzeigeeinrichtung (100) nach einem der vorhergehenden Ansprüche, **dadurch gekennzeichnet, dass** zwischen der ersten Sitzfläche (102) und dem Abdeckring (105) oder Abdeckringsegment eine sich zumindest teilweise über den Umfang erstreckende Dichtung (108) und/oder zwischen einer zweiten Sitzfläche (103) und dem Abdeckring (105) oder Abdeckringsegment eine sich zumindest teilweise über den Umfang erstreckende Dichtung (109) angeordnet ist.

9. Anzeigeeinrichtung (100) nach einem der vorhergehenden Ansprüche, **dadurch gekennzeichnet, dass** zwischen der ersten Sitzfläche (102) und dem Abdeckring (105) oder Abdeckringsegment eine sich zumindest teilweise über den Umfang erstreckende Dichtung (108) und/oder zwischen einer ersten oder zweiten Stirnwand (110, 111) und einer Stirnfläche des Abdeckrings (105) oder Abdeckringsegments eine sich zumindest teilweise über den Umfang erstreckende Dichtung (109) angeordnet ist.

10. Anzeigeeinrichtung (100) nach einem der vorhergehenden Ansprüche, **dadurch gekennzeichnet, dass** der Abdeckring (105) oder das Abdeckringsegment stirnseitig zwischen einer ersten Stirnwand (110) und zweiten Stirnwand (111) eingefasst ist, wobei eine aus erster und zweiter Stirnwand (110, 111) von einem von dem Grundkörper (101) separaten Teil gebildet ist und die andere aus erster und zweiter Stirnwand (110, 111) beispielsweise von dem Grundkörper (101) gebildet wird, wobei bevorzugt ist, dass die Vertiefung (104) nutförmig ist, wobei eine aus erster und zweiter Stirnwand (110, 111) die eine Nutflanke bildet und der Abschnitt, der die erste Sitzfläche bildet, die andere Nutflanke der nutförmigen Vertiefung (104) bildet.

11. Flüssigkeitsbehälter, umfassend einen Aufnahmeraum (14) zur Aufnahme einer Flüssigkeit und eine Anzeigeeinrichtung (100) nach einem der vorhergehenden Ansprüche, wobei der Aufnahmeraum (14) über einen Fluidkanal (106), der in die sich ringförmig zumindest teilweise über den Umfang erstreckende Vertiefung (104) mündet, mit der Anzeigeeinrichtung (100) verbunden ist, wodurch sich der Flüssigkeitsstand in der Anzeigeeinrichtung (100) und der Flüssigkeitsstand in dem Aufnahmeraum (14) nach dem hydrostatischen Paradoxon aneinander angleichen, wobei bevorzugt ist, dass der Flüssigkeitsbehälter von einem Getriebe (10) gebildet wird und sich in dem Aufnahmeraum (14) Getriebekomponenten (20, 30, 40) befinden, die eine Umsetzung einer Drehung einer Eingangswelle (13) in eine Abtriebsdrehung bewirken und von der im Aufnahmeraum (14) befindlichen Flüssigkeit geschmiert werden.

12. Getriebe (10), umfassend:
- ein erstes Gehäuse (11) und eine Eingangswelle (13), die relativ zu dem ersten Gehäuse um eine Drehachse (D) drehbar ist,
- ein zweites Gehäuse (12), das relativ zu dem ersten Gehäuse (11) um die Drehachse (D) drehbar an dem ersten Gehäuse (11) gelagert ist,
- mindestens eine Planetenstufe (20, 30, 40), welche die Eingangswelle (13) kinematisch so mit dem zweiten Gehäuse (12) verbindet, dass eine Drehung der Eingangswelle (13) eine über- oder untersetzte Drehung des zweiten Gehäuses (12) relativ zu dem ersten Gehäuse (11) um die Drehachse (D) bewirkt, wobei das erste Gehäuse (11) und das zweite Gehäuse (12) einen Aufnahmeraum (14) einfassen, in dem Schmieröl und die mindestens eine Planetenstufe (20, 30, 40) angeordnet sind, wobei die mindestens eine Planetenstufe (20, 30, 40) zumindest teilweise unter den Flüssigkeitsspiegel des Schmieröls getaucht ist,
- eine Anzeigeeinrichtung (100) nach einem der Ansprüche 1 bis 10, wobei deren Grundkörper (101) ortsfest in Bezug auf das erste Gehäuse (11) angeordnet ist und sich der Abdeckring (105) oder das Abdeckringsegment, insbesondere konzentrisch, um die Drehachse (D) erstreckt, wobei der Aufnahmeraum (14) über einen Fluidkanal (106), der in die sich zumindest teilweise über den Umfang und/oder die Drehachse (D) erstreckende Vertiefung (104) mündet, mit der Anzeigeeinrichtung (100) flüssigkeitskommunizierend verbunden ist, wodurch sich der Ölstand in der Anzeigeeinrichtung (100) und der Ölstand in dem Aufnahmeraum (14) nach dem hydrostatischen Paradoxon aneinander angleichen.

13. Getriebe (10) nach Anspruch 12, **gekennzeichnet durch** eine Fördereinrichtung (12a, 16), welche ausgestaltet ist, Schmieröl aus dem Aufnahmeraum über mindestens einen Fluidzuführkanal (15) in die Anzeigeeinrichtung (100) zu fördern, wobei sich der Ölstand in der Anzeigeeinrichtung (100) an den Ölstand in dem Aufnahmeraum (14) dadurch angleicht, dass Schmieröl aus der Anzeigeeinrichtung (100) über den Fluidkanal (106) aus der Anzeigeeinrichtung (100) in den Aufnahmeraum (14) fließen kann, wobei bevorzugt ist, dass ein erster Fluidzuführkanal (15) die Fördereinrichtung (12a, 16) und einen Vorraum (17) und ein zweiter, als Überlauf dienender Fluidzuführkanal (107) den Vorraum (17) und die Vertiefung (104) fluidkommunizierend verbindet, wobei die Austrittsöffnung (107a) aus dem Vorraum (17) in den zweiten Fluidzuführkanal (107) oberhalb einer Markierung für den maximalen Ölstand der Anzeigeeinrichtung (100) angeordnet ist, wodurch sich im Vorraum (17) ein Flüssigkeitsspiegel des Schmieröls einstellt, der oberhalb der Markierung für den maximalen Ölstand der Anzeigeeinrichtung (100) angeordnet ist.

14. Getriebe (10) nach Anspruch 12 oder 13, **dadurch gekennzeichnet, dass** der Grundkörper (101) der Anzeigeeinrichtung (100) den Vorraum (17) bildet oder umgibt und/oder an dem Grundkörper (101) ein für den Antrieb der Antriebswelle (13) ausgebildeter Motor angebracht oder anbringbar ist.

15. Winde (1), insbesondere Seilwinde, umfassend:
- ein Getriebe (10) nach einem der Ansprüche 12 bis 14,
- ein Windengestell (3) mit zumindest einer Wand, an der das erste Gehäuse (11) des Getriebes (10) verdrehfest befestigt ist, und
- eine relativ zu dem Windengestell (3) um die Drehachse (D) drehbare, verdrehfest mit dem zweiten Gehäuse (12) verbundene Windentrommel (2),
- wobei die Windentrommel (2) auf einer Seite der Wand und die Anzeigeeinrichtung (100) auf der anderen Seite der Wand angeordnet ist.

## Claims

1. An indicating means (100) on which a liquid level, in particular an oil level, can be visually read off, the indicating means comprising:
a) a base body (101) which forms at least a first seat (102) which extends at least partially over the circumference of the base body (101); and
b) a recess (104) which extends at least partially over the circumference of the base body (101);
**characterised by**
c) a covering ring (105) or covering ring segment which is transparent at least in sections and which covers the first seat (102), and the inner surface of which covers or delineates the recess (104), wherein the space enclosed by the recess (104) and the covering ring (105) or covering ring segment serves to accommodate the liquid, the level of which is to be read off.

2. The indicating means (100) according to Claim 1, **characterised in that** the base body (101) forms a second seat (103) which extends at least partially over the circumference of the base body (101), wherein the recess (104) is arranged between the first seat (102) and the second seat (103), and wherein the covering ring (105) covers the first seat (102) and the second seat (103), and its inner surface covers or delineates the recess (104).

3. The indicating means (100) according to Claim 1 or 2, **characterised in that** the recess (104) is a groove which extends at least partially over the circumference and is open towards the covering ring (105) or covering ring segment and which is sealed by means of the covering ring (105) or covering ring segment.

4. The indicating means (100) according to Claim 3, **characterised in that** the lateral groove flanks (104a, 104b) and groove base (104c) of the groove (104) and the covering ring (105) or covering ring segment delineate or enclose a space or annular space, which extends at least partially over the circumference, in order to accommodate the liquid, the level of which is to be read off.

5. The indicating means (100) according to Claim 3 or 4, **characterised by** a fluid channel (106) which feeds through the groove base (104c) of the groove (104) into the groove (104) which extends at least partially over the circumference.

6. The indicating means (100) according to any one of the preceding claims, **characterised in that** the indicating means (100) comprises a marking for a minimum liquid level, wherein a fluid channel (106) feeds into the recess (104) at a point which is arranged below the marking for the minimum liquid level or at the lowest point of the recess (104) relative to the direction of gravity.

7. The indicating means (100) according to any one of the preceding claims, **characterised in that** the indicating means (100) comprises a marking for a maximum liquid level, wherein a fluid channel (107) feeds into the recess (104) at a point which is arranged above the marking for the maximum liquid level.

8. The indicating means (100) according to any one of the preceding claims, **characterised in that** a gasket (108) which extends at least partially over the circumference is arranged between the first seat (102) and the covering ring (105) or covering ring segment, and/or a gasket (109) which extends at least partially over the circumference is arranged between a second seat (103) and the covering ring (105) or covering ring segment.

9. The indicating means (100) according to any one of the preceding claims, **characterised in that** a gasket (108) which extends at least partially over the circumference is arranged between the first seat (102) and the covering ring (105) or covering ring segment, and/or a gasket (109) which extends at least partially over the circumference is arranged between a first or second end-facing wall (110, 111) and an end-facing surface of the covering ring (105) or covering ring segment.

10. The indicating means (100) according to any one of the preceding claims, **characterised in that** the covering ring (105) or covering ring segment is enclosed on an end-facing side between a first end-facing wall (110) and a second end-facing wall (111), wherein one of the first end-facing wall (110) and second end-facing wall (111) is formed by a part which is separate from the base body (101), and the other of the first end-facing wall (110) and second end-facing wall (111) is for example formed by the base body (101), wherein the recess (104) is preferably groove-shaped, wherein one of the first end-facing wall (110) and second end-facing wall (111) forms one groove flank, and the section which forms the first seat forms the other groove flank of the groove-shaped recess (104).

11. A liquid container, comprising: an accommodating space (14) for accommodating a liquid; and an indicating means (100) according to any one of the preceding claims, wherein the accommodating space (14) is connected to the indicating means (100) via a fluid channel (106) which feeds into the recess (104) which annularly extends at least partially over the circumference, whereby the liquid level in the indicating means (100) and the liquid level in the accommodating space (14) are adjusted to each other in accordance with the hydrostatic paradox, wherein the liquid container is preferably formed by a gearing (10), and gear components (20, 30, 40) are situated in the accommodating space (14) which cause a rotation of an input shaft (13) to be converted into an output rotation and which are lubricated by the liquid situated in the accommodating space (14).

12. A gearing (10), comprising:
- a first housing (11) and an input shaft (13) which can be rotated relative to the first housing about a rotational axis (D);
- a second housing (12) which is mounted on the first housing (11) such that it can be rotated relative to the first housing (11) about the rotational axis (D);
- at least one planetary stage (20, 30, 40) which kinematically connects the input shaft (13) to the second housing (12) such that rotating the input shaft (13) generates a geared-up or geared-down rotation of the second housing (12) relative to the first housing (11) about the rotational axis (D), wherein the first housing (11) and the second housing (12) enclose an accommodating space (14) in which lubricating oil and the at least one planetary stage (20, 30, 40) are arranged, wherein the at least one planetary stage (20, 30, 40) is at least partially submerged below the liquid surface of the lubricating oil;
- an indicating means (100) according to any one of Claims 1 to 10, the base body (101) of which is arranged stationary in relation to the first housing (11), wherein the covering ring (105) or covering ring segment extends, in particular concentrically, around the rotational axis (D), wherein the accommodating space (14) is connected to and in liquid communication with the indicating means (100) via a fluid channel (106) which feeds into the recess (104) which extends at least partially over the circumference and/or rotational axis (D), whereby the oil level in the indicating means (100) and the oil level in the accommodating space (14) are adjusted to each other in accordance with the hydrostatic paradox.

13. The gearing (10) according to Claim 12, **characterised by** a conveying means (12a, 16) which is embodied to convey lubricating oil from the accommodating space into the indicating means (100) via at least one fluid supply channel (15), wherein the oil level in the indicating means (100) is adjusted to the oil level in the accommodating space (14) by enabling lubricating oil from the indicating means (100) to flow from the indicating means (100) into the accommodating space (14) via the fluid channel (106), wherein a first fluid supply channel (15) preferably connects the conveying means (12a, 16) and an antechamber (17) in fluid communication, and a second fluid supply channel (107) which serves as an overflow preferably connects the antechamber (17) and the recess (104) in fluid communication, wherein the outlet opening (107a) from the antechamber (17) into the second fluid supply channel (107) is arranged above a marking for the maximum oil level of the indicating means (100), whereby a liquid surface of the lubricating oil in the antechamber (17) is set which is arranged above the marking for the maximum oil level of the indicating means (100).

14. The gearing (10) according to Claim 12 or 13, **characterised in that** the base body (101) of the indicating means (100) forms or surrounds the antechamber (17), and/or a motor which is designed to drive the drive shaft (13) is or can be attached to the base body (101).

15. A winch (1), in particular a cable winch, comprising:
- a gearing (10) according to any one of Claims 12 to 14;
- a winch frame (3) comprising at least one wall to which the first housing (11) of the gearing (10) is non-rotationally fastened; and
- a winch drum (2) which can be rotated relative to the winch frame (3) about the rotational axis (D) and is non-rotationally connected to the second housing (12),
- wherein the winch drum (2) is arranged on one side of the wall, and the indicating means (100) is arranged on the other side of the wall.

## Revendications

1. Dispositif d'affichage (100), sur lequel il est possible de lire visuellement un niveau de fluide, en particulier un niveau d'huile, le dispositif d'affichage (100) comprenant :
a) un corps de base (101), qui forme au moins une première surface d'appui (102) qui s'étend au moins partiellement sur la circonférence du corps de base (101), et
b) une cavité (104) s'étendant au moins partiellement sur la circonférence du corps de base (101),
**caractérisé par**
c) une bague de recouvrement (105) transparente au moins sur une section ou un segment de bague de recouvrement transparent au moins sur une section, laquelle ou lequel recouvre la première surface d'appui (102) et recouvre ou délimite la cavité (104) avec sa surface intérieure, dans lequel l'espace encadré par la cavité (104) et la bague de recouvrement (105) ou le segment de bague de recouvrement sert à recevoir le fluide dont le niveau doit être lu.

2. Dispositif d'affichage (100) selon la revendication 1, **caractérisé en ce que** le corps de base (101) forme une seconde surface d'appui (103) qui s'étend au moins partiellement sur la circonférence du corps de base (101), dans lequel la cavité (104) est disposée entre la première surface d'appui (102) et la seconde surface d'appui (103) et dans lequel la bague de recouvrement (105) recouvre la première surface d'appui (102) et la seconde surface d'appui (103) et recouvre ou délimite la cavité (104) avec sa surface intérieure.

3. Dispositif d'affichage (100) selon la revendication 1 ou 2, **caractérisé en ce que** la cavité (104) est une rainure ouverte vers la bague de recouvrement (105) ou le segment de bague de recouvrement, s'étendant au moins partiellement sur la circonférence, et qui est fermée à l'aide de la bague de recouvrement (105) ou du segment de bague de recouvrement.

4. Dispositif d'affichage (100) selon la revendication 3, **caractérisé en ce que** la rainure (104) avec ses flancs de rainure latéraux (104a, 104b) et son fond de rainure (104c) ainsi que la bague de recouvrement (105) ou le segment de bague de recouvrement délimitent ou encadrent un espace, ou espace annulaire, s'étendant au moins partiellement sur la circonférence pour recevoir le fluide dont le niveau doit être lu.

5. Dispositif d'affichage (100) selon la revendication 3 ou 4, **caractérisé par** un canal de fluide (106) qui débouche, en traversant le fond de rainure (104c) de la rainure (104), jusque dans la rainure (104) s'étendant au moins partiellement sur la circonférence.

6. Dispositif d'affichage (100) selon une des revendications précédentes, **caractérisé en ce que** le dispositif d'affichage (100) présente un marquage pour un niveau de fluide minimum, dans lequel un canal de fluide (106) débouche en un emplacement dans la cavité (104) qui est disposé en dessous du marquage pour le niveau de fluide minimum ou au niveau le plus bas de la cavité (104) par rapport au sens de la force de la pesanteur.

7. Dispositif d'affichage (100) selon une des revendications précédentes, **caractérisé en ce que** le dispositif d'affichage (100) présente un marquage pour un niveau de fluide maximum, dans lequel un canal de fluide (107) débouche en un emplacement dans la cavité (104) qui est disposé au-dessus du marquage pour le niveau de fluide maximum.

8. Dispositif d'affichage (100) selon une des revendications précédentes, **caractérisé en ce qu'**il est disposé, entre la première surface d'appui (102) et la bague de recouvrement (105) ou le segment de bague de recouvrement, un joint d'étanchéité (108) s'étendant au moins partiellement sur la circonférence et/ou, entre une seconde surface d'appui (103) et la bague de recouvrement (105) ou le segment de bague de recouvrement, un joint d'étanchéité (109) s'étendant au moins partiellement sur la circonférence.

9. Dispositif d'affichage (100) selon une des revendications précédentes, **caractérisé en ce qu'**il est disposé, entre la surface d'appui (102) et la bague de recouvrement (105) ou le segment de bague de recouvrement, un joint d'étanchéité (108) s'étendant au moins partiellement sur la circonférence et/ou, entre une première ou seconde paroi frontale (110, 111) et une surface frontale de la bague de recouvrement (105) ou du segment de bague de recouvrement, un joint d'étanchéité (109) s'étendant au moins partiellement sur la circonférence.

10. Dispositif d'affichage (100) selon une des revendications précédentes, **caractérisé en ce que** la bague de recouvrement (105) ou le segment de bague de recouvrement est encadré côté frontal entre une première paroi frontale (110) et une seconde paroi frontale (111), dans lequel une paroi frontale (110, 111) parmi la première et la seconde est formée par une partie séparée du corps de base (101) et l'autre paroi frontale (110, 111) parmi la première et la seconde est formée par exemple par le corps de base (101), dans lequel il est préféré que la cavité (104) ait la forme d'une rainure, une paroi frontale (110, 111) parmi la première et la seconde formant un flanc de rainure et la section qui forme la première surface d'appui formant l'autre flanc de rainure de la cavité (104) en forme de rainure .

11. Réservoir de fluide, comprenant un espace de réception (14) pour recevoir un fluide et un dispositif d'affichage (100) selon une des revendications précédentes, dans lequel l'espace de réception (14) est relié au dispositif d'affichage (100) par le biais d'un canal de fluide (106) qui débouche dans la cavité (104) s'étendant de manière annulaire au moins partiellement sur la circonférence, ce qui permet au niveau de fluide dans le dispositif d'affichage (100) et au niveau de fluide dans l'espace de réception (14) de correspondre l'un avec l'autre selon le paradoxe hydrostatique, dans lequel il est préféré que le réservoir de fluide soit formé par une transmission(10) et que des composants de transmission (20, 30, 40) se trouvent dans l'espace de réception (14), entraînent une transformation d'une rotation d'un arbre d'entrée (13) en une rotation d'entraînement et sont lubrifiés par le fluide qui se trouve dans l'espace de réception (14).

12. Transmission (10), comprenant :
- un premier boîtier (11) et un arbre d'entrée (13) qui peut tourner autour d'un axe de rotation (D) par rapport au premier boîtier,
- un second boîtier (12) qui est monté sur le premier boîtier (11) et peut tourner autour de l'axe de rotation (D) par rapport au premier boîtier (11),
- au moins un étage planétaire (20, 30, 40) qui relie l'arbre d'entrée (13) de manière cinématique avec le second boîtier (12) de telle sorte qu'une rotation de l'arbre d'entrée (13) entraîne une rotation sur ou sous-démultipliée du second boîtier (12) par rapport au premier boîtier (11) autour de l'axe de rotation (D), dans laquelle le premier boîtier (11) et le second boîtier (12) encadrent un espace de réception (14) dans lequel une huile lubrifiante et l'au moins un étage planétaire (20, 30, 40) sont disposés, au moins un étage planétaire (20, 30, 40) étant plongé au moins partiellement sous le niveau de fluide de l'huile lubrifiante,
- un dispositif d'affichage (100) selon une des revendications 1 à 10, dans lequel son corps de base (101) est disposé de manière fixe par rapport au premier boîtier (11) et la bague de recouvrement (105) ou le segment de bague de recouvrement s'étend, en particulier de manière concentrique, autour de l'axe de rotation(D), dans lequel l'espace de réception (14) est relié au dispositif d'affichage (100) en communication de fluide par le biais d'un canal de fluide (106) qui débouche dans la cavité (104) s'étendant au moins partiellement sur la circonférence et/ou l'axe de rotation (D), ce qui permet au niveau d'huile dans le dispositif d'affichage (100) et au niveau d'huile dans l'espace de réception (14) de correspondre l'un avec l'autre selon le paradoxe hydrostatique.

13. Transmission (10) selon la revendication 12, **caractérisée par** un moyen de transport (12a, 16), qui est conçu pour transporter l'huile lubrifiante depuis l'espace de réception par le biais d'au moins un canal d'alimentation en fluide (15) jusque dans le dispositif d'affichage (100), dans lequel le niveau d'huile dans le dispositif d'affichage (100) correspond au niveau d'huile dans l'espace de réception (14) par le fait que l'huile lubrifiante du dispositif d'affichage (100) peut circuler par le biais du canal de fluide (106) depuis le dispositif d'affichage (100) jusque dans l'espace de réception (14), dans laquelle il est préféré qu'un premier canal d'alimentation en fluide (15) relie en communication de fluide le moyen de transport (12a, 16) et une préchambre (17) et qu'un second canal d'alimentation en fluide (107) servant de trop-plein relie en communication de fluide la préchambre (17) et la cavité (104), dans laquelle l'ouverture de sortie (107a) de la préchambre (17) est disposée dans le second canal d'alimentation en fluide (107) au-dessus d'un marquage pour le niveau d'huile maximum du dispositif d'affichage (100), ce qui permet à un niveau de fluide de l'huile lubrifiante qui est disposé au-dessus du marquage pour le niveau d'huile maximum du dispositif d'affichage (100) de s'ajuster dans la préchambre (17).

14. Transmission (10) selon la revendication 12 ou 13, **caractérisée en ce que** le corps de base (101) du dispositif d'affichage (100) forme ou entoure la préchambre (17) et/ou un moteur conçu pour l'entraînement de l'arbre d'entraînement (13) est appliqué ou peut être appliqué sur le corps de base (101).

15. Treuil (1), en particulier treuil à câble, comprenant:
- une transmission (10) selon une des revendications 12 à 14,
- un support de treuil (3) avec au moins une paroi sur laquelle est fixé de manière anti-torsion le premier boîtier (11) de la transmission (10), et
- un tambour de treuil (2) relié de manière anti-torsion au second boîtier (12) et pouvant tourner de manière relative autour de l'axe de rotation (D) par rapport au support de treuil (3),
- dans lequel le tambour de treuil (2) est disposé sur un côté de la paroi et le dispositif d'affichage (100) sur l'autre côté de la paroi.
